(19) Europäisches Patentamt
European Patent Office
Office européen des brevets

(11) **EP 1 840 621 A1**

(12) **EUROPEAN PATENT APPLICATION**

(43) Date of publication:
**03.10.2007 Bulletin 2007/40**

(51) Int Cl.:
***G02B 15/173*** *(2006.01)*

(21) Application number: **07105245.0**

(22) Date of filing: **29.03.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (71) Applicant: **Sony Corporation**<br>**Minato-ku**<br>**Tokyo (JP)** |
| (30) Priority: **29.03.2006 JP 2006090568** | (72) Inventor: **Matsumoto, Hiroyuki**<br>**TOKYO (JP)**<br><br>(74) Representative: **Thévenet, Jean-Bruno et al**<br>**Cabinet Beau de Loménie**<br>**158, rue de l'Université**<br>**75340 Paris Cédex 07 (FR)** |

(54) **Four-group optical zoom lens of the telephoto type**

(57)     An optical zoom includes from object to image side a first lens group (GR1) having a positive power, a second lens group (GR2) having a negative power, and a third lens group (GR3) having a positive power and at least one further positive-power lens group on the image plane side of the third lens group (GR3). When zooming is performed from wide-angle to telephoto end, all the lens groups are moved, the first and third lens groups (GR1,GR3) are monotonically moved towards the object side so that the distance between the first and second lens groups (GR1,GR2) increases, the distance between the second and third lens groups (GR2,GR3) decreases and the distance between the third lens group (GR3) and the following lens group decreases. The third lens group (GR3) includes one negative and one positive lens (L9,L10) from the object side and the following inequality is satisfied:

0,5 < f3/fGS(w) < 5

where f3 denotes the focal length of the third lens group and fGS(w) that of the following groups at wide angle end.

FIG. 1

**Description**

BACKGROUND OF THE INVENTION

1. Field of the Invention

The present invention relates to a variable-magnification optical system used for image capturing apparatuses, such as digital still cameras, and, in particular, to a variable-magnification optical system mounted in an interchangeable lens unit.

2. Description of the Related Art

Many known image capturing apparatuses, such as silver salt film cameras and video cameras, have a zooming capability and a long back focus. For example, Japanese Unexamined Patent Application Publication No. 2000-75204 describes a zoom lens system (a variable-magnification optical system) that can be mounted on silver salt film cameras. In addition, Japanese Unexamined Patent Application Publication No. 2003-241088 describes a zoom lens system that can be mounted on video cameras.

The zoom lens system described in Japanese Unexamined Patent Application Publication No. 2000-75204 includes four lens groups having, from the object side to the image plane side, positive, negative, positive, and positive powers. When the zooming operation is performed, each of the four lens groups is moved. Additionally, in this zoom lens system, the third positive lens group from the object side includes a combination of positive and negative lenses (a positive-negative power arrangement from the object side to the image plane side).

Accordingly, the length of this zoom lens system is short due to the positive-negative power arrangement (telephoto arrangement) in the third lens group. Therefore, the zoom lens system described in Japanese Unexamined Patent Application Publication No. 2000-75204 is suitable for silver salt film cameras that require a short length.

In contrast, the zoom lens system described in Japanese Unexamined Patent Application Publication No. 2003-241088 includes four lens groups having, from the object side to the image plane side, positive, negative, positive, and positive powers. When a zooming operation is performed, the second and fourth lens groups are moved. Additionally, in this zoom lens system, the third positive lens group from the object side includes a combination of negative, positive, and positive lenses (a negative-positive-positive power arrangement from the object side to the image plane side).

Accordingly, the back focus of this zoom lens system is long due to the negative-positive-positive power arrangement (a retrofocus arrangement) in the third lens group. Therefore, the zoom lens system described in Japanese Unexamined Patent Application Publication No. 2003-241088 is suitable for video cameras that require a long back focus in order to incorporate a color separation prism.

SUMMARY OF THE INVENTION

However, the zoom lens systems described in Japanese Unexamined Patent Application Publication No. 2000-75204 and Japanese Unexamined Patent Application Publication No. 2003-241088 are not suitable for interchangeable lens units of digital still cameras (DSCs).

In general, even when interchangeable lens units of digital still cameras have a high zoom capability, users of the DSCs dislike interchangeable lens units that are too long. However, to mount the interchangeable lens unit on the body of the DSC, a certain back focus length is required. Therefore, an interchangeable lens unit having a short length and a certain back focus length is desirable.

If the zoom lens system described in Japanese Unexamined Patent Application Publication No. 2000-75204 is applied to an interchangeable lens unit of a DSC that supports the APS-C format, the length of the zoom lens system is short, since the size of an image sensor of the DSC is smaller than the silver salt film size (the 135 full-format). However, due to the short length, it is difficult for this zoom lens system to provide a certain back focus length.

In contrast, if the zoom lens system described in Japanese Unexamined Patent Application Publication No. 2003-241088 is applied to an interchangeable lens unit of a DSC that supports the APS-C format, the length of the zoom lens system is long, since the size of an image sensor of the DSC is larger than the size of a significantly small image sensor of a video camera. Accordingly, although this lens optical system can ensure the certain back focus length, the length of the lens optical system is significantly increased.

Accordingly, the present invention provides a variable-magnification optical system having a short length even when the variable-magnification optical system has a certain back focus length.

According to an embodiment of the present invention, a variable-magnification optical system includes at least a first lens group having a positive power, a second lens group having a negative power, and a third lens group having a positive power disposed in this order from an object side to an image plane side, and at least one subsequent positive-power lens group having a positive power on the image plane side of the third lens group.

The subsequent lens groups may be, for example, realized using only one positive-power lens group or two positive-power lens groups.

In addition, when variable magnification is performed from a wide-angle position to a telephoto position, the variable-magnification optical system moves all the lens groups. In particular, by monotonically moving the first lens group and the third lens group towards the object side, the variable-magnification optical system increases a distance between the first lens group and the second lens group, decreases a distance between the second lens group and the third lens group, and decreases a distance between the third lens group and the subsequent lens group closest to the object.

That is, if the subsequent lens groups is realized using only one positive-power lens group, the subsequent lens group closest to the object is a fourth lens group from the object. Accordingly, in the variable-magnification optical system including four lens groups, a distance between the third lens group and the fourth lens group is decreased when variable magnification is performed from a wide-angle position to a telephoto position.

In contrast, if the subsequent lens groups are realized using two positive-power lens groups, the subsequent lens group closest to the object is a fourth lens group. A positive-power lens group located on the image plane side of the fourth lens is a fifth lens group from the object.

In such a variable-magnification optical system including five lens groups, a distance between the third lens group and the fourth lens group is decreased and a distance between the fourth lens group and the fifth lens group (i.e., a distance between the two positive-power lens groups) is also decreased when variable magnification is performed from a wide-angle position to a telephoto position.

Note that, in both cases where the variable-magnification optical system includes four lens groups and five lens groups, the second lens group is moved in order to perform a focusing operation.

In addition, the third lens group of the above-described variable-magnification optical system includes a negative lens on the object side and a positive lens on the image plane side. In this way, the third lens group has a negative-positive retrofocus power arrangement. Accordingly, the back focus of the variable-magnification optical system is increased. However, since the third lens group includes only two lenses, an increase in the length of the variable-magnification optical system due to the thicknesses of the lenses can be prevented. Furthermore, since the third lens group includes a negative lens and a positive lens, the third lens group can effectively correct chromatic aberrations. Note that the negative lens may be bonded to the positive lens so as to form a cemented lens.

In addition, it is desirable that the variable-magnification optical system satisfies the following conditional expression (1):

$$0.5 < f3/fGS(w) < 5 \qquad\qquad \dots (1)$$

where

f3 = the focal length of the third lens group, and

fGS(w) = the combined focal length of the subsequent lens groups at the wide-angle position.

This conditional expression (1) defines a range required for achieving a good balance between the high performance of correcting aberrations and the reduction in the length of the variable-magnification optical system.

For example, if the focal length of the third lens group is decreased, and therefore, a value of f3/fGS(w) is less than or equal to the lower limit of conditional expression (1), the positive power of the third lens group relatively is increased. Thus, a variety of aberrations occur due to the excessively strong positive power. In particular, the under spherical aberration and curvature of field occur at the telephoto position. Furthermore, if the focal length of the subsequent lens groups is increased, and therefore, a value of f3/fGS(w) is less than or equal to the lower limit of conditional expression (1), the length of the variable-magnification optical system is increased in accordance with the increase in the focal length.

In contrast, when the focal length of the third lens group is increased and the value of f3/fGS(w) is greater than or equal to the upper limit of conditional expression (1), the positive power of the third lens group is relatively weak. Therefore, the third lens group cannot sufficiently converge the diverging light beam input from the second lens group. Thus, various aberrations occur and, in particular, the over spherical aberration and the curvature of field occur at a telephoto position. In addition, if the focal length of the subsequent lens group is decreased and the value of f3/fGS(w) is greater than or equal to the upper limit of conditional expression (1), various aberrations occur due to the decrease in the focal length (i.e., an increase in the power).

Accordingly, if the combined focal length of the focal length of the third lens group and the focal length of the subsequent lens groups is set so that conditional expression (1) is satisfied, the length of the variable-magnification optical system can be decreased. In addition, the occurrence of various aberrations can be prevented.

Additionally, it is desirable that the variable-magnification optical system satisfies the following condition (2):

$$0.1 < f3/fall(w) < 8 \qquad \ldots (2)$$

where
f3 = the focal length of the third lens group, and
fall(w) = the focal length of the whole variable-magnification optical system at the wide-angle position.

Conditional expression (2) defines a range required for achieving a good balance between the extension of the back focus and the reduction in the length of the variable-magnification optical system.

For example, if the focal length of the third lens group is short, and therefore, a value of f3/fall(w) is less than or equal to the lower limit of conditional expression (2), the third lens group having a retrofocus power arrangement does not produce the desired effect. Thus, the back focus is decreased. In contrast, if the focal length of the third lens group is long, and therefore, a value of f3/fall(w) is greater than or equal to the upper limit of conditional expression (2), the length of the variable-magnification optical system is increased due to the long focal length.

Consequently, when the focal length of the third lens group GR3 and the focal length of the variable-magnification optical system at the wide-angle position are determined so as to satisfy conditional expression (2), the length of the variable-magnification optical system can be decreased while the back focus is increased.

In addition, it is desirable that the variable-magnification optical system satisfy the following conditional expression (3):

$$2 < |f1/f2| < 12 \qquad \ldots (3)$$

where
f1 = the focal length of the first lens group and
f2 = the focal length of the second lens group.

Conditional expression (3) defines a range required for achieving the reduction in the length of the variable-magnification optical system.

For example, if the focal length of the first lens group is decreased and a value of |f1/f2| is less than or equal to the lower limit of conditional expression (3), the displacement of the first lens group for zooming is small. However, to correct various aberrations caused by the increase in the positive power, more number of lenses are needed. Thus, the length of the variable-magnification optical system is increased. Alternatively, if the focal length of the second lens group is increased and a value of |f1/f2| is less than or equal to the lower limit of conditional expression (3), the focusing operation using the second lens group requires a relatively large displacement distance for focusing. Thus, the length of the variable-magnification optical system is increased.

In contrast, if the focal length of the first lens group is increased and a value of |f1/f2| is greater than or equal to the upper limit of conditional expression (3), the displacement of the first lens group for zooming is large. Thus, the length of the variable-magnification optical system is increased. Alternatively, if the focal length of the second lens group is decreased and a value of |f1/f2| is greater than or equal to the upper limit of conditional expression (3), the negative power of the second lens group is relatively increased. Thus, the size of the third lens group that receives widely diverging light is increased. Consequently, the length of the variable-magnification optical system is increased.

Accordingly, when the focal lengths of the first lens group and the second lens group are determined so as to satisfy conditional expression (3), the length of the variable-magnification optical system can be decreased.

Furthermore, it is desirable that the variable-magnification optical system satisfies the following conditional expression (4):

$$0.9 < f12(w)/fall(w) < 1.5 \qquad \ldots (4)$$

where
f12(w) = the combined focal length of the first lens group and the second lens group at the wide-angle position
fall(w) = the focal length of the whole variable-magnification optical system at the wide-angle position.

Note that conditional expression (4) defines the range required for achieving a good balance between the extension of the back focus and the reduction in the length of the variable-magnification optical system.

For example, if the combined focal length of the first lens group and the second lens group is decreased and, therefore, the value of f12(w)/fall(w) is less than or equal to the lower limit of conditional expression (4), the combined power of the first lens group and the second lens group is relatively increased. In this case, light propagating to the third lens group is widely diverged. Accordingly, to receive the diverged light, the size of the third lens group should be increased. Therefore, the length of the variable-magnification optical system is increased.

In contrast, for example, when the combined focal length of the first lens group and the second lens group is increased and, therefore, the value of f12(w)/fall(w) is greater than or equal to the upper limit of conditional expression (4), the combined power of the first lens group and the second lens group is relatively weak. Accordingly, although the size of the third lens group can be reduced, it is difficult to ensure the back focus.

Accordingly, when the combined focal length of the first lens group and the second lens group and the focal length of the whole variable-magnification optical system at the wide-angle position are determined so as to satisfy conditional expression (4), the length of the variable-magnification optical system can be reduced and the back focus can be increased.

Alternatively, the subsequent lens group in the variable-magnification optical system may include, from the object side to the image plane side, a positive lens, a negative lens, a negative lens, and a positive lens. In such a power arrangement of the subsequent lens group, a positive-negative power arrangement (i.e., a telephoto arrangement) is achieved on the object side and a negative-positive arrangement (i.e., a retrofocus arrangement) is achieved on the image plane side. Due to the telephoto arrangement, the length of the variable-magnification optical system is reduced. In addition, due to the retrofocus arrangement, the back focus is increased and the position of the exit pupil is moved away.

Alternatively, in the subsequent lens group, the third negative power from the object side may be achieved by a positive lens and a negative lens. At that time, the subsequent lens group includes, from the object side to the image plane side, a positive lens, a negative lens, a positive lens, a negative lens, and a positive lens. In such a case, the length of the variable-magnification optical system is reduced whereas the back focus is increased.

In addition, in order to sufficiently correct a variety of aberrations, it is desirable that at least one surface of the lenses in the subsequent lens group is aspherical. Furthermore, it is desirable that at least one surface of the lenses in the second lens group is aspherical.

According to the above-described embodiments of the present invention, since the third lens group includes two lenses composed of a negative lens and a positive lens from the object side to the image plane side, a retrofocus arrangement is achieved. Therefore, a variable-magnification optical system that can easily provide a long back focus is achieved. In addition, since the third lens group of the variable-magnification optical system is composed of the two lenses, the thickness of the third lens group is relatively reduced. Accordingly, the length of the variable-magnification optical system can be reduced. That is, the variable-magnification optical system having both a short length and a certain length of a back focus can be provided.

BRIEF DESCRIPTION OF THE DRAWINGS

Fig. 1 illustrates an exemplary structure of lenses arranged in a line in a variable-magnification optical system according to a first example;

Figs. 2A to 2C illustrate aberrations of the variable-magnification optical system according to the first example when zooming is performed, where Fig. 2A is a spherical aberration graph, Fig. 2B is an astigmatism graph, and Fig. 2C is a distortion aberration graph at a wide-angle position (W);

Figs. 3A to 3C illustrate aberrations of the variable-magnification optical system according to the first example when zooming is performed, where Fig. 3A is a spherical aberration graph, Fig. 3B is an astigmatism graph, and Fig. 3C is a distortion aberration graph at a middle focal point (M);

Figs. 4A to 4C illustrate aberrations of the variable-magnification optical system according to the first example when zooming is performed, where Fig. 4A is a spherical aberration graph, Fig. 4B is an astigmatism graph, and Fig. 4C is a distortion aberration graph at a telephoto position (T);

Fig. 5 illustrates an exemplary structure of lenses arranged in a line in a variable-magnification optical system according to a second example;

Figs. 6A to 6C illustrate aberrations of the variable-magnification optical system according to the second example when zooming is performed, where Fig. 6A is a spherical aberration graph, Fig. 6B is an astigmatism graph, and Fig. 6C is a distortion aberration graph at a wide-angle position (W);

Figs. 7A to 7C illustrate aberrations of the variable-magnification optical system according to the second example when zooming is performed, where Fig. 7A is a spherical aberration graph, Fig. 7B is an astigmatism graph, and Fig. 7C is a distortion aberration graph at a middle focal point (M);

Figs. 8A to 8C illustrate aberrations of the variable-magnification optical system according to the second example when zooming is performed, where Fig. 8A is a spherical aberration graph, Fig. 8B is an astigmatism graph, and Fig. 8C is a distortion aberration graph at a telephoto position (T);

Fig. 9 illustrates an exemplary structure of lenses arranged in a line in a variable-magnification optical system according to a third example;

Figs. 10A to 10C illustrate aberrations of the variable-magnification optical system according to the third example when zooming is performed, where Fig. 10A is a spherical aberration graph, Fig. 10B is an astigmatism graph, and Fig. 10C is a distortion aberration graph at a wide-angle position (W);

Figs. 11A to 11C illustrate aberrations of the variable-magnification optical system according to the third example when zooming is performed, where Fig. 11A is a spherical aberration graph, Fig. 11B is an astigmatism graph, and Fig. 11C is a distortion aberration graph at a middle focal point (M);

Figs. 12A to 12C illustrate aberrations of the variable-magnification optical system according to the third example when zooming is performed, where Fig. 12A is a spherical aberration graph, Fig. 12B is an astigmatism graph, and Fig. 12C is a distortion aberration graph at a telephoto position (T);

Fig. 13 illustrates an exemplary structure of lenses arranged in a line in a variable-magnification optical system according to a fourth example of the present invention;

Figs. 14A to 14C illustrate aberrations of the variable-magnification optical system according to the fourth example when zooming is performed, where Fig. 14A is a spherical aberration graph, Fig. 14B is an astigmatism graph, and Fig. 14C is a distortion aberration graph at a wide-angle position (W);

Figs. 15A to 15C illustrate aberrations of the variable-magnification optical system according to the fourth example when zooming is performed, where Fig. 15A is a spherical aberration graph, Fig. 15B is an astigmatism graph, and Fig. 15C is a distortion aberration graph at a middle focal point (M);

Figs. 16A to 16C illustrate aberrations of the variable-magnification optical system according to the fourth example when zooming is performed, where Fig. 16A is a spherical aberration graph, Fig. 16B is an astigmatism graph, and Fig. 16C is a distortion aberration graph at a telephoto position (T);

Fig. 17 illustrates an exemplary structure of lenses arranged in a line in a variable-magnification optical system according to a fifth example of the present invention;

Figs. 18A to 18C illustrate aberrations of the variable-magnification optical system according to the fifth example when zooming is performed, where Fig. 18A is a spherical aberration graph, Fig. 18B is an astigmatism graph, and Fig. 18C is a distortion aberration graph at a wide-angle position (W);

Figs. 19A to 19C illustrate aberrations of the variable-magnification optical system according to the fifth example when zooming is performed, where Fig. 19A is a spherical aberration graph, Fig. 19B is an astigmatism graph, and Fig. 19C is a distortion aberration graph at a middle focal point (M);

Figs. 20A to 20C illustrate aberrations of the variable-magnification optical system according to the fifth example when zooming is performed, where Fig. 20A is a spherical aberration graph, Fig. 20B is an astigmatism graph, and Fig. 20C is a distortion aberration graph at a telephoto position (T);

Fig. 21 illustrates an exemplary structure of lenses arranged in a line in a variable-magnification optical system according to a sixth example;

Figs. 22A to 22C illustrate aberrations of the variable-magnification optical system according to the sixth example when zooming is performed, where Fig. 22A is a spherical aberration graph, Fig. 22B is an astigmatism graph, and Fig. 22C is a distortion aberration graph at a wide-angle position (W);

Figs. 23A to 23C illustrate aberrations of the variable-magnification optical system according to the sixth example when zooming is performed, where Fig. 23A is a spherical aberration graph, Fig. 23B is an astigmatism graph, and Fig. 23C is a distortion aberration graph at a middle focal point (M);

Figs. 24A to 24C illustrate aberrations of the variable-magnification optical system according to the sixth example when zooming is performed, where Fig. 24A is a spherical aberration graph, Fig. 24B is an astigmatism graph, and Fig. 24C is a distortion aberration graph at a telephoto position (T);

Fig. 25 illustrates an exemplary structure of lenses arranged in a line in a variable-magnification optical system according to a seventh example of the present invention;

Figs. 26A to 26C illustrate aberrations of the variable-magnification optical system according to the seventh example when zooming is performed, where Fig. 26A is a spherical aberration graph, Fig. 26B is an astigmatism graph, and Fig. 26C is a distortion aberration graph at a wide-angle position (W);

Figs. 27A to 27C illustrate aberrations of the variable-magnification optical system according to the seventh example when zooming is performed, where Fig. 27A is a spherical aberration graph, Fig. 27B is an astigmatism graph, and Fig. 27C is a distortion aberration graph at a middle focal point (M);

Figs. 28A to 28C illustrate aberrations of the variable-magnification optical system according to the seventh example when zooming is performed, where Fig. 28A is a spherical aberration graph, Fig. 28B is an astigmatism graph, and Fig. 28C is a distortion aberration graph at a telephoto position (T); and

Fig. 29 is a block diagram of an image capturing apparatus (a digital still camera).

DESCRIPTION OF THE PREFERRED EMBODIMENTS

First Embodiment

A first embodiment of the present invention is described below with reference to the accompanying drawings.

1. Digital Still Camera

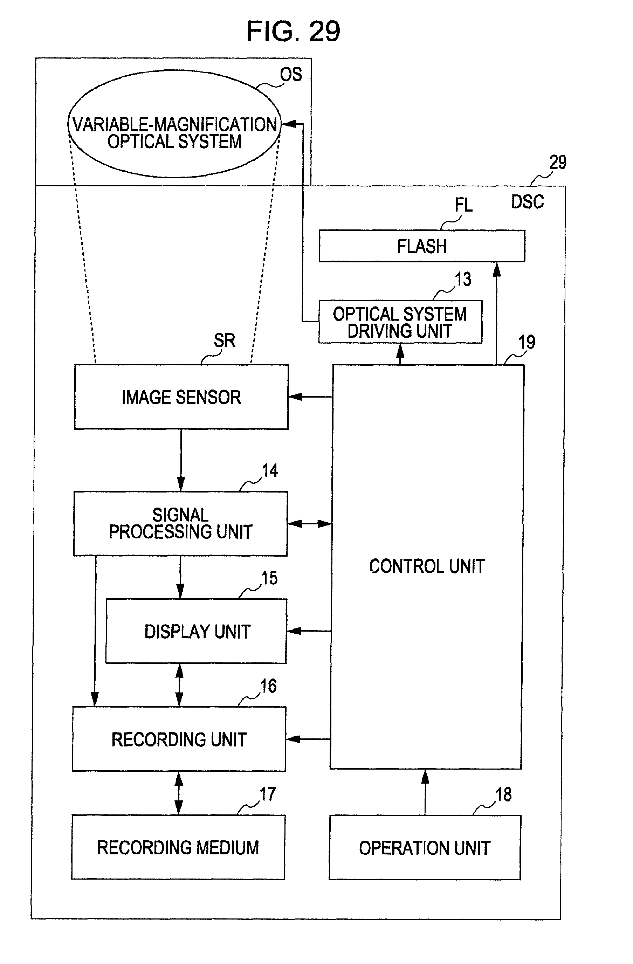

Fig. 29 is a block diagram of a digital still camera (DSC) (an image capturing apparatus) 29 on which a variable-magnification optical system OS can be mounted.

As shown in Fig. 29, the DSC 29 includes an interchangeable variable-magnification optical system OS, a flash FL, an optical system driving unit 13, an image sensor SR, a signal processing unit 14, a display unit 15, a recording unit 16, a recording medium 17, an operation unit 18, and a control unit 19.

The interchangeable variable-magnification optical system OS guides light from an object photographed (from an object side) to the image sensor SR and focuses the light on the light receiving surface (an image plane) of the image sensor SR. Accordingly, the variable-magnification optical system OS may be expressed as an image-forming optical system or an image-capturing optical system. This variable-magnification optical system OS is described in more detail below.

The flash FL serves as a light source that emits light onto the object, thereby increasing the light (the reflected light) from the object. Thus, the image sensor SR can easily capture an image of the object.

The optical system driving unit 13 includes a plurality of drive motors (optical system drive motors) (not shown) and a transfer mechanism (not shown) for transferring the drive forces produced by the drive motors to the variable-magnification optical system OS. The optical system driving unit 13 determines the focal length and a focus point of the variable-magnification optical system OS using the drive motors and the transfer mechanism. More specifically, in response to an instruction from the control unit 19, the optical system driving unit 13 determines the focal length and a focal point of the variable-magnification optical system OS.

Examples of the image sensor SR include an area sensor of a charged coupled device (CCD) and a complementary metal oxide semiconductor (CMOS) sensor. The image sensor SR receives light that has passed through the variable-magnification optical system OS and converts the received light to an electrical signal (imaging data). Thereafter, the image sensor SR outputs the imaging data to the signal processing unit 14.

The signal processing unit 14 processes the electronic data (imaging data) output from the image sensor SR and generates captured-image data on the basis of the imaging data. In addition, the signal processing unit 14 starts and stops the processing in response to an instruction from the control unit 19. Furthermore, the signal processing unit 14 outputs the captured-image data to the display unit 15 and the recording unit 16 in response to an instruction from the control unit 19.

The display unit 15 includes, for example, a liquid crystal panel. The display unit 15 displays the captured-image data output from the signal processing unit 14 or setting and status information about the DSC 29.

The recording unit 16 stores the captured-image data generated by the signal processing unit 14 on the recording medium 17 in response to an instruction from the control unit 19. Additionally, the recording unit 16 reads the captured-image data out of the recording medium 17 in response to an instruction from the control unit 19 in accordance with the operation of the operation unit 18.

The recording medium 17 may be incorporated in the DSC 29 or may be removable like a flash memory. Any type of recording medium (such as an optical disk or a semiconductor memory) that can store the captured-image data can be used.

The operation unit 18 receives a variety of operations performed by a user and outputs instructions in accordance with the operations. For example, the operation unit 18 includes a shutter release button and an operation dial.

The control unit 19 is a main part of the DSC 29 for performing control of the DSC 29. The control unit 19 integrally controls each of components of the DSC 29 to determine the operation of the DSC 29.

2. Variable-Magnification Optical System

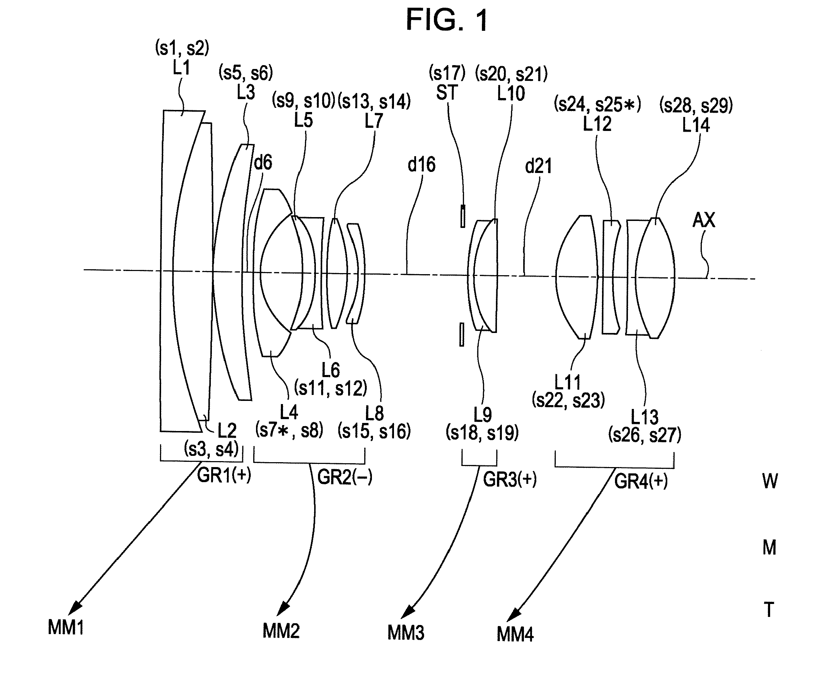

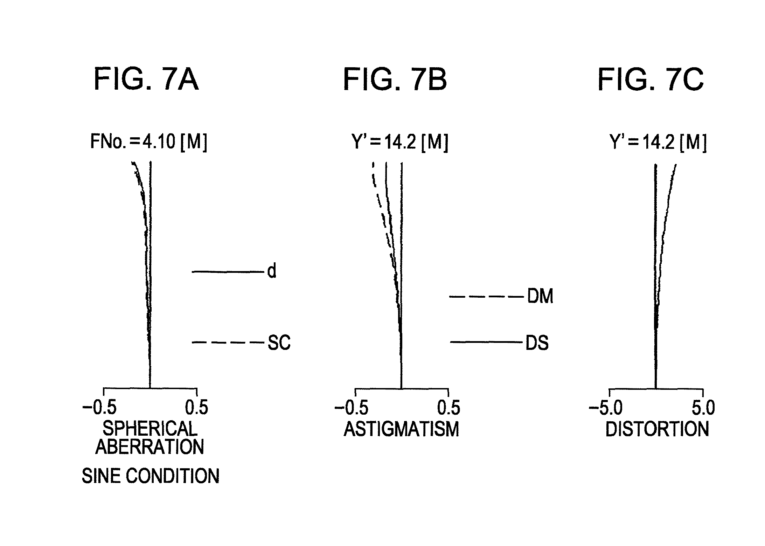

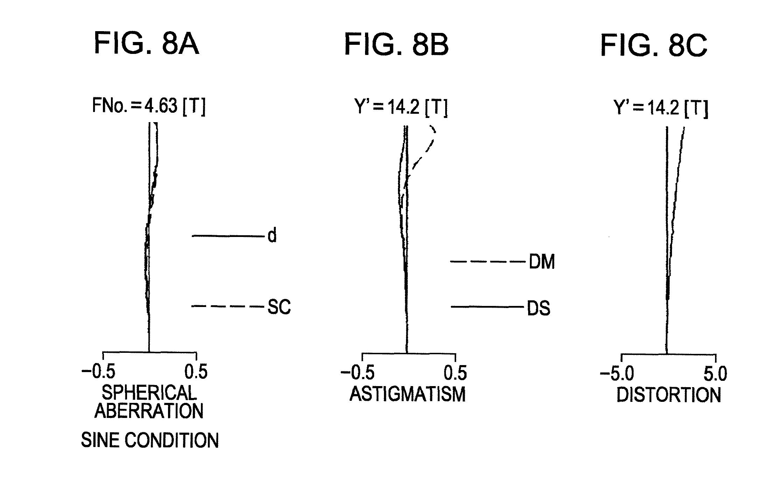

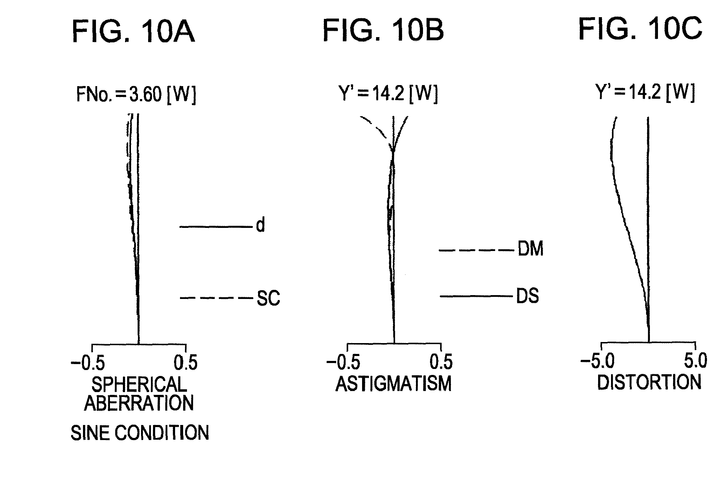

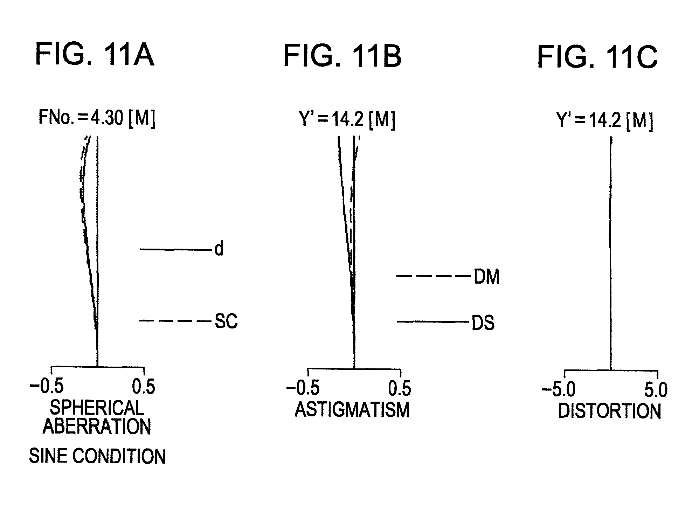

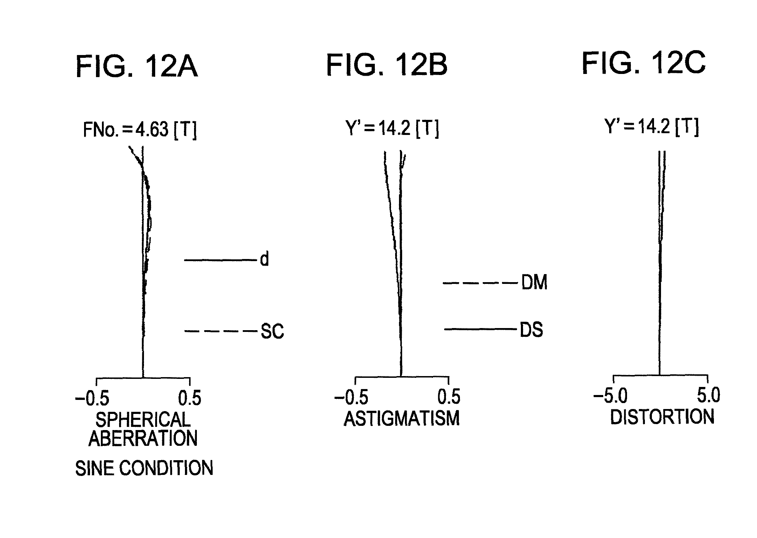

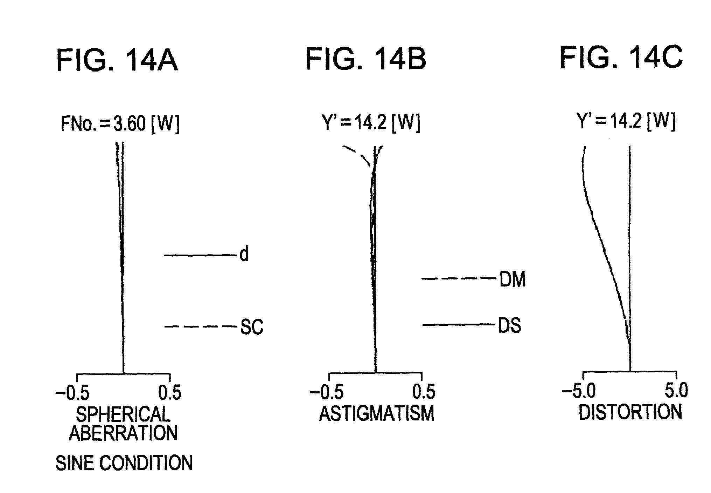

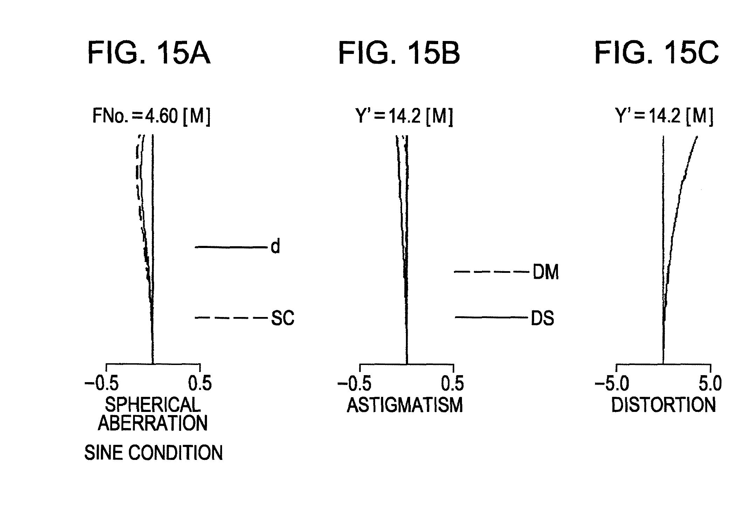

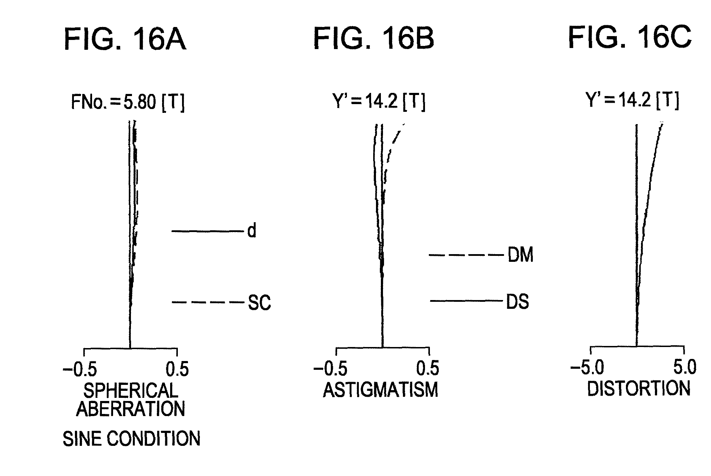

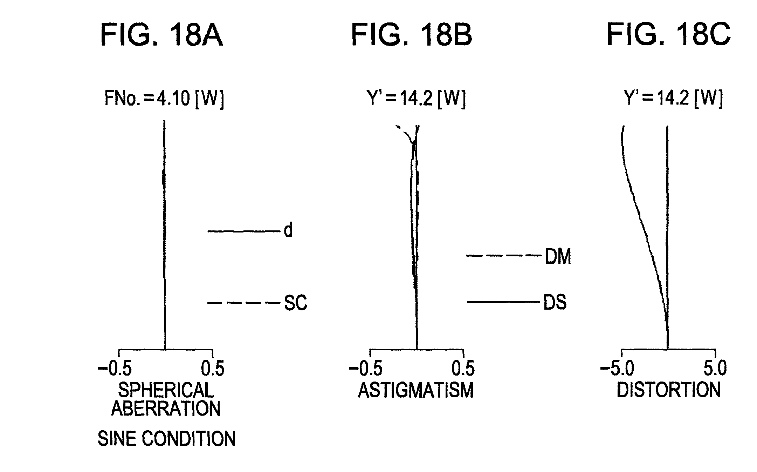

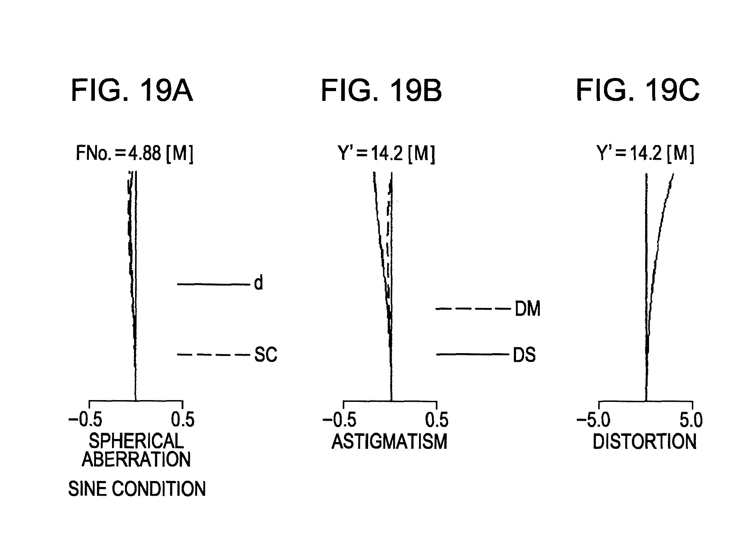

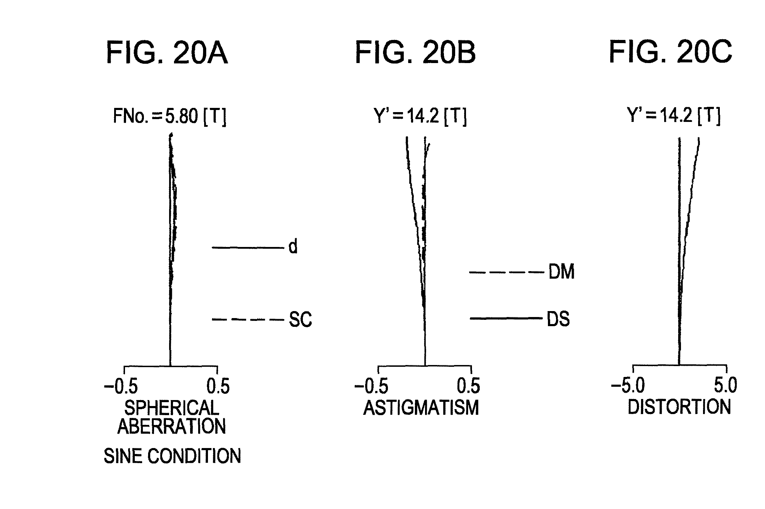

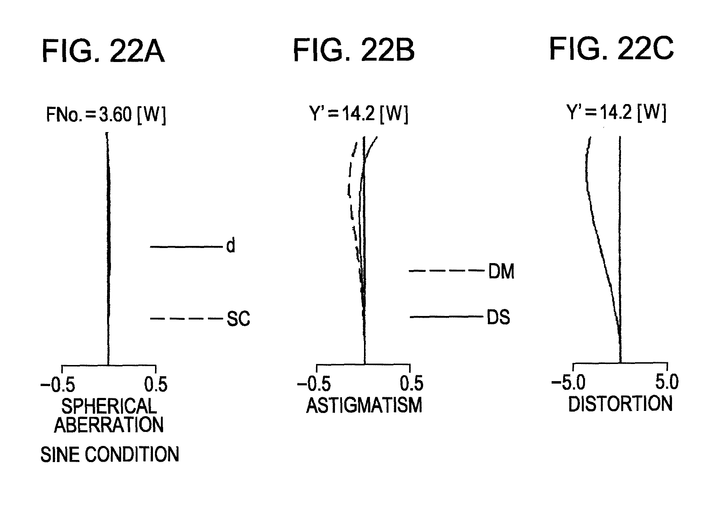

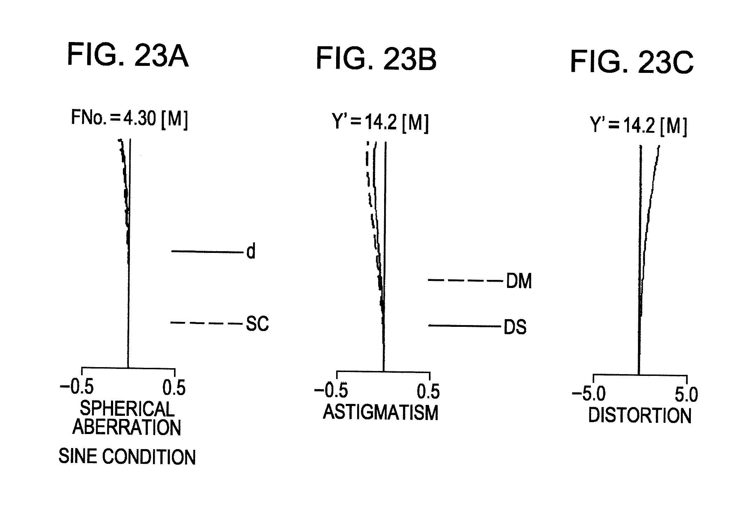

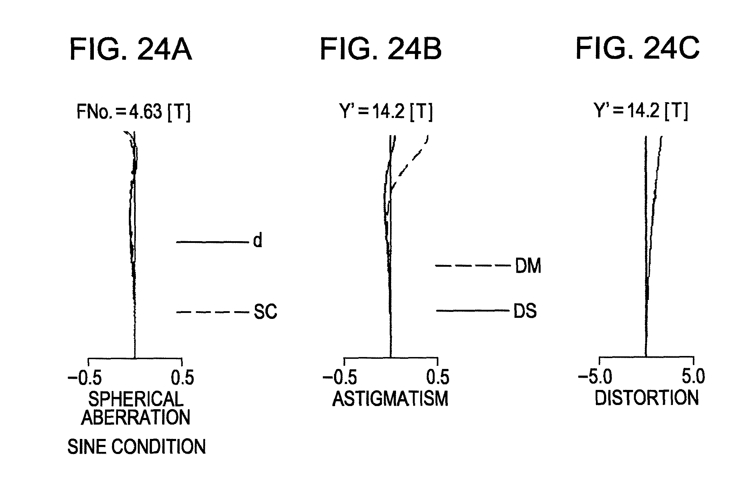

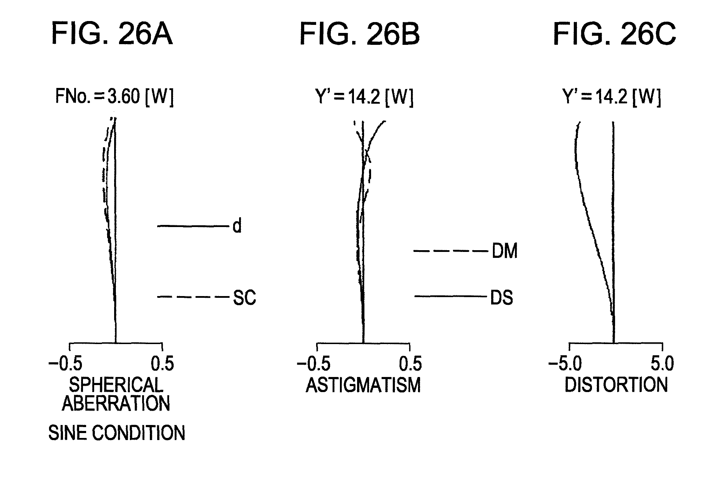

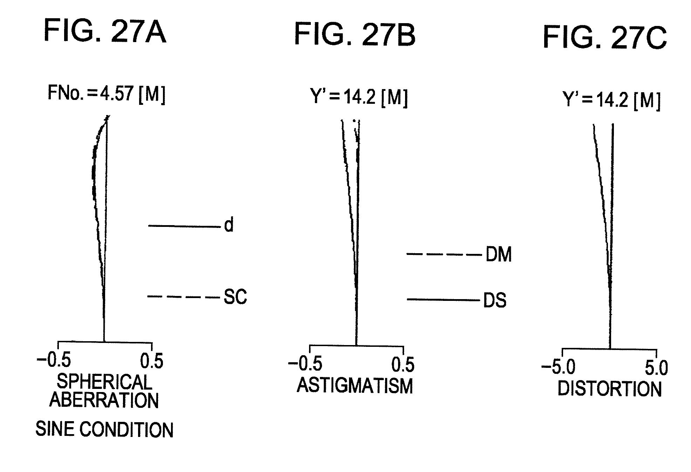

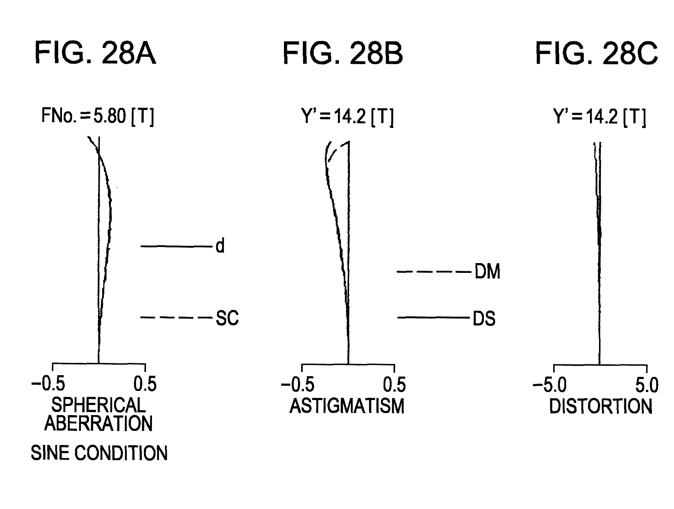

2-1. Structure of Variable-Magnification Optical System According to First to Seventh Examples (see Figs. 1 to 28)

Variable-magnification optical systems according to first to seventh examples are described below with reference to Figs. 1 to 28C. Such variable-magnification optical systems OS are incorporated in, for example, an interchangeable lens unit, which is mounted on the body of the DSC 29.

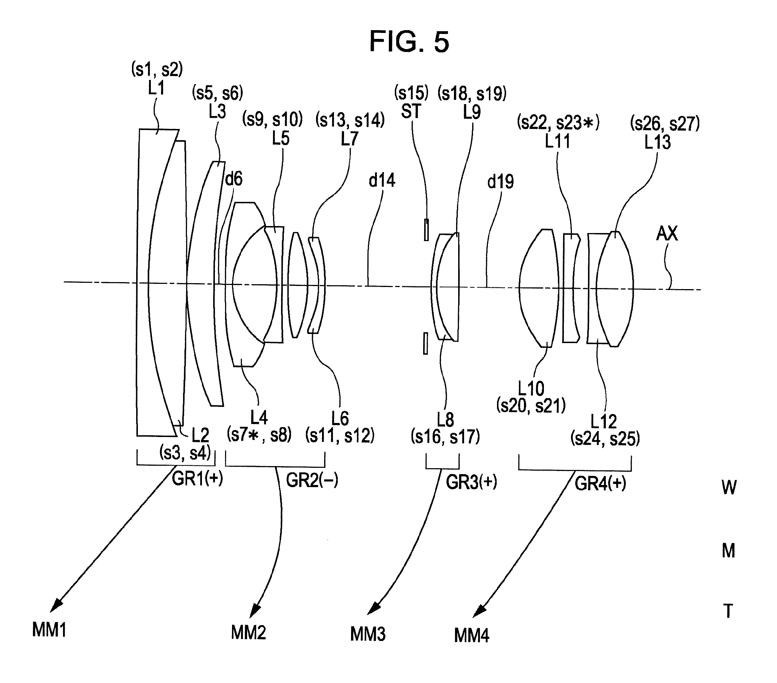

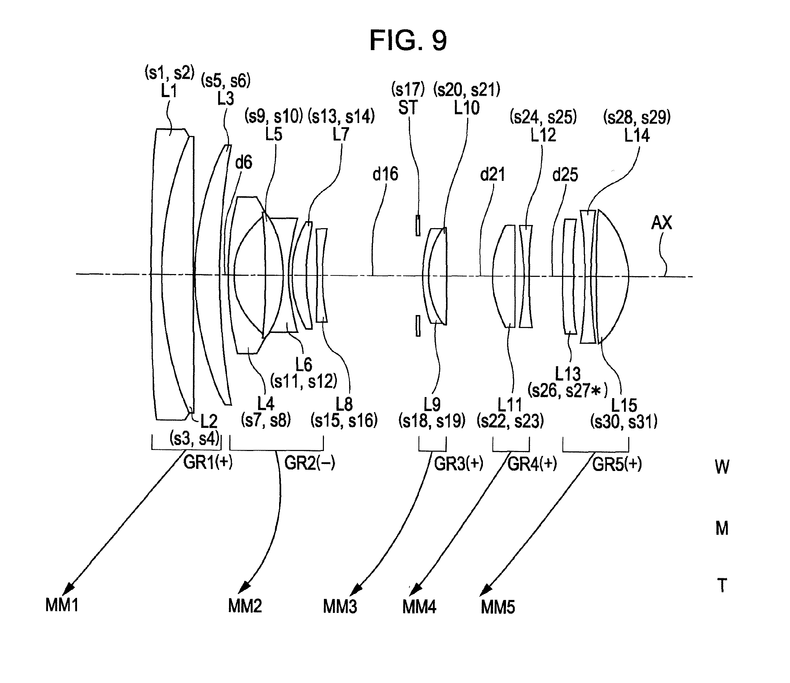

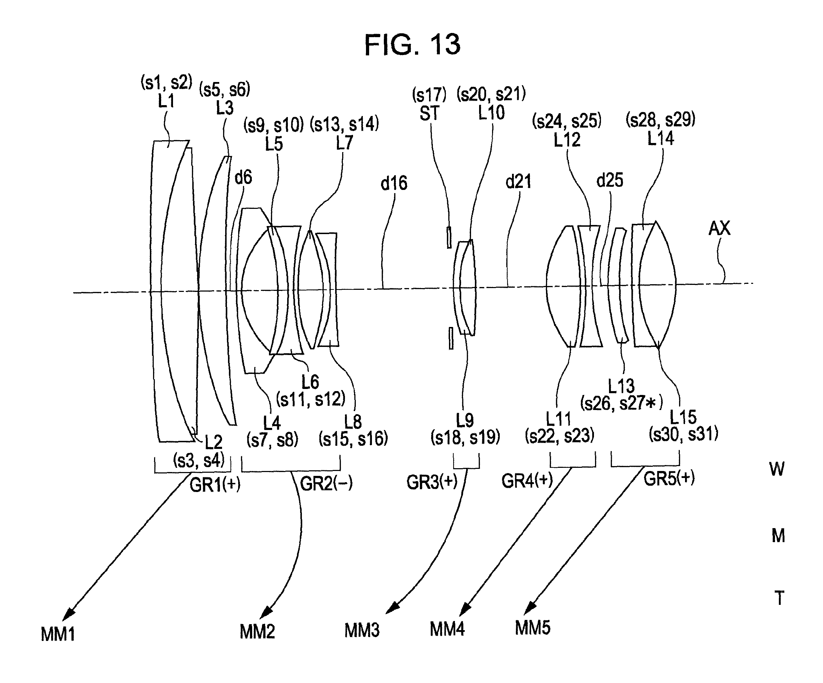

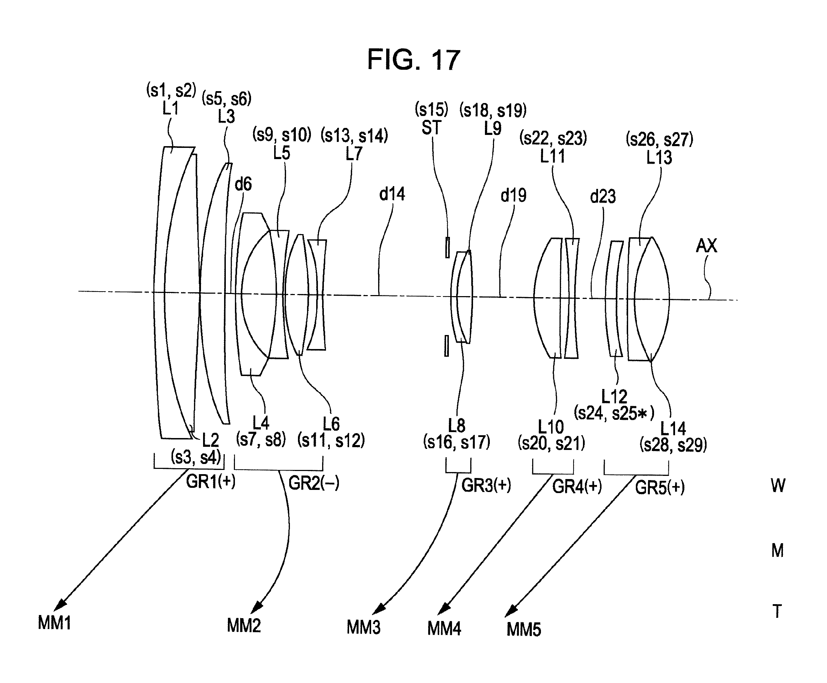

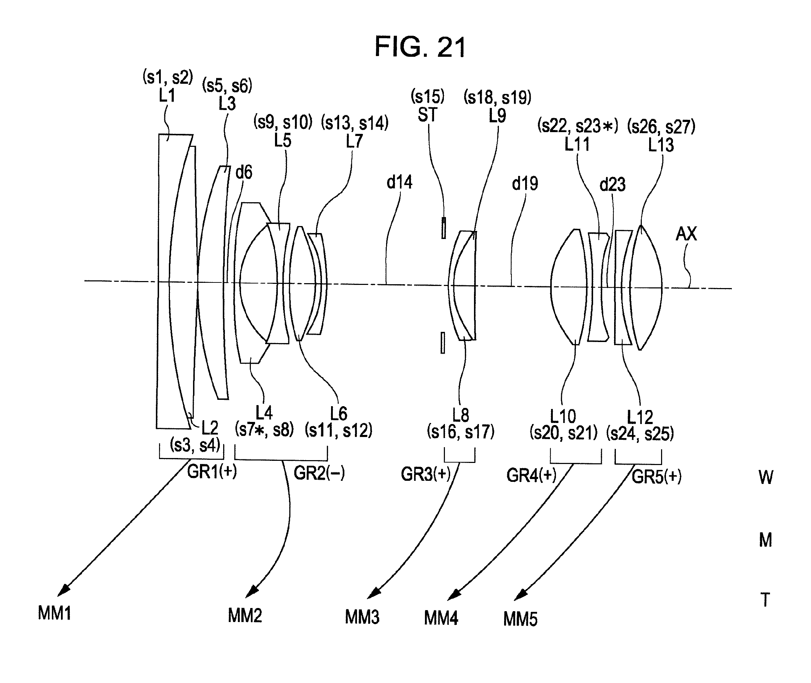

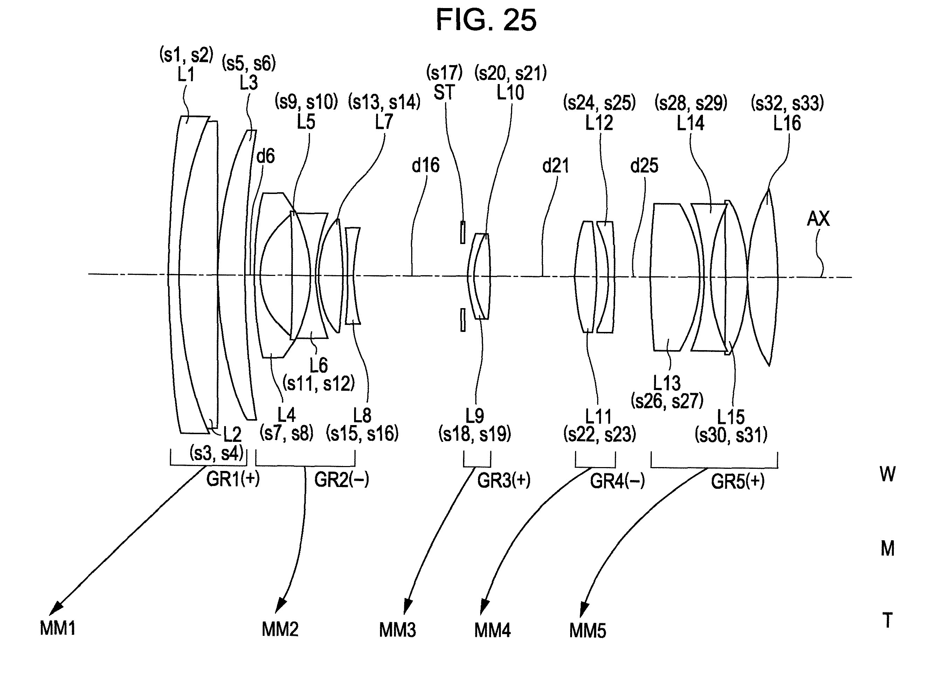

Note that the first example is described with reference to Figs. 1 to 4C, the second example is described with reference to Figs. 5 to 8C, the third example is described with reference to Figs. 9 to 12C, the fourth example is described with reference to Figs. 13 to 16C, the fifth example is described with reference to Figs. 17 to 20C, the sixth example is described with reference to Figs. 21 to 24C, and the seventh example is described with reference to Figs. 25 to 28C.

Cross-sectional views of lenses in the drawings (Figs. 1, 5, 9, 13, 17, 21, and 25) indicate the variable-magnification optical systems OS in which the lenses are arranged in a line. In the drawings, a symbol "GRi" denotes a lens group and "Li" denotes a lens. A symbol "si" denotes a surface of a lens (such as a transmission surface). The number "i" suffixed to "GR", "L", or "s" denotes the positional order of a lens group, a lens, or a surface of a lens from the object side to the image plane side, respectively. In addition, a symbol "*" denotes an aspherical surface.

2-1-1. Structure of Variable-Magnification Optical System According to First Example (see Fig. 1)

According to the first example, the variable-magnification optical system OS includes a first lens group GR1, a second lens group GR2, a third lens group GR3, and a fourth lens group GR4 in this order from the object side to the image plane side.

<First Lens Group>

The first lens group GR1 includes a first lens L1, a second lens L2, and a third lens L3 in this order from the object side to the image plane side. The first lens group GR1 has a positive (+) optical power (refractive power). Note that this power is defined as the inverse of the focal length.

The lenses of the first lens group GR1 have the following characteristics:

(a) the first lens L1: a negative meniscus lens with a convex surface on the object side;
(b) the second lens L2: a positive lens with two convex surfaces; and
(c) the third lens L3: a positive meniscus lens with a convex surface on the object side.

The first lens L1 and the second lens L2 are bonded at the lens surfaces s2 and s3 so as to form a cemented lens. The first lens L1 and the second lens L2 may be bonded by means of an adhesive agent. Note that, in the following examples, the lenses may be bonded by means of an adhesive agent, like the first example.

<Second Lens Group>

The second lens group GR2 includes a fourth lens L4, a fifth lens L5, and a sixth lens L6, a seventh lens L7, and an eighth lens L8 in this order from the object side to the image plane side. The second lens group GR2 has a negative (-) optical power.

The lenses of the second lens group GR2 have the following characteristics:

(a) the fourth lens L4: a negative meniscus lens with a convex surface on the object side (note that s7* is an aspherical surface);
(b) the fifth lens L5: a positive meniscus lens with a concave surface on the object side;
(c) the sixth lens L6: a negative lens with two concave surfaces;
(d) the seventh lens L7: a positive lens with two convex surfaces; and
(e) the eighth lens L8: a negative meniscus lens with a concave surface on the object side.

The fifth lens L5 and the sixth lens L6 are bonded at the lens surfaces S10 and S11 so as to form a cemented lens. As used herein, the term "aspherical surface" is referred to as a refraction optical surface having an aspherical shape or a surface providing refraction the same as that provided by the refraction optical surface having an aspherical shape.

<Third Lens Group>

The third lens group GR3 includes an optical aperture ST, a ninth lens L9, and a tenth lens L10. The third lens group GR3 has a positive optical power.

The optical aperture ST and the lenses of the third lens group GR3 have the following characteristics:

(a) the optical aperture ST: an aperture that partially blocks a light beam that has passed through the first lens group GR1 and the second lens group GR2 (the optical aperture ST is also referred to as "s17" and is integrated into the third lens group GR3);
(b) the ninth lens L9: a negative meniscus lens with a convex surface on the object side; and

(c) the tenth lens L10: a positive lens with two convex surfaces.

The ninth lens L9 and the tenth lens L10 are bonded at the lens surfaces s19 and s20 so as to form a cemented lens.

<Fourth Lens Group>

The fourth lens group GR4 includes an eleventh lens L11, a twelfth lens L12, a thirteenth lens L13, and a fourteenth lens L14. The fourth lens group GR4 has a positive optical power.
The lenses of the fourth lens group GR4 have the following characteristics:

(a) the eleventh lens L11: a positive lens with two convex surfaces;
(b) the twelfth lens L12: a negative lens with two concave surfaces (note that s25* is an aspherical surface);
(c) the thirteenth lens L13: a negative lens with two concave surfaces; and
(d) the fourteenth lens L14: a positive lens with two convex surfaces.

The thirteenth lens L13 and the fourteenth lens L14 are bonded at the lens surfaces s27 and s28 so as to form a cemented lens.

2-1-2. Structure of Variable-Magnification Optical System According to Second Example (see Fig. 5)

Like the first example, according to the second example, the variable-magnification optical system OS includes a first lens group GR1, a second lens group GR2, a third lens group GR3, and a fourth lens group GR4 in this order from the object side to the image plane side. In addition, like the first example, the power arrangement of this variable-magnification optical system OS is positive, negative, positive, and positive.

<First Lens Group>

The first lens group GR1 includes a first lens L1, a second lens L2, and a third lens L3 in this order from the object side to the image plane side.
The lenses of the first lens group GR1 have the following characteristics:

(a) the first lens L1: a negative meniscus lens with a convex surface on the object side;
(b) the second lens L2: a positive lens with two convex surfaces; and
(c) the third lens L3: a positive meniscus lens with a convex surface on the object side.

The first lens L1 and the second lens L2 are bonded at the lens surfaces s2 and s3 so as to form a cemented lens.

<Second Lens Group>

The second lens group GR2 includes a fourth lens L4, a fifth lens L5, and a sixth lens L6, and a seventh lens L7 in this order from the object side to the image plane side.
The lenses of the second lens group GR2 have the following characteristics:

(a) the fourth lens L4: a negative meniscus lens with a convex surface on the object side (note that s7* is an aspherical surface);
(b) the fifth lens L5: a negative lens with two concave surfaces;
(c) the sixth lens L6: a positive lens with two convex surfaces;
(d) the seventh lens L7: a negative meniscus lens with a concave surface on the object side.

<Third Lens Group>

The third lens group GR3 includes an optical aperture ST, an eighth lens L8, and a ninth lens L9.
The optical aperture ST and the lenses of the third lens group GR3 have the following characteristics:

(a) the optical aperture ST: like that according to the first example, an aperture that partially blocks a light beam (the optical aperture ST is also referred to as "s15" and is integrated into the third lens group GR3);
(b) the eighth lens L8: a negative meniscus lens with a convex surface on the object side; and

(c) the ninth lens L9: a positive lens with two convex surfaces.

The eighth lens L8 and the ninth lens L9 are bonded at the lens surfaces s17 and s18 so as to form a cemented lens.

<Fourth Lens Group>

The fourth lens group GR4 includes a tenth lens L10, an eleventh lens L11, a twelfth lens L12, and a thirteenth lens L13.

The lenses of the fourth lens group GR4 have the following characteristics:

(a) the tenth lens L10: a positive lens with two convex surfaces;
(b) the eleventh lens L11: a negative lens with two concave surfaces (note that s23[*] is an aspherical surface);
(c) the twelfth lens L12: a negative lens with two concave surfaces; and
(d) the thirteenth lens L13: a positive lens with two convex surfaces.

The twelfth lens L12 and the thirteenth lens L13 are bonded at the lens surfaces s25 and s26 so as to form a cemented lens.

2-1-3. Structure of Variable-Magnification Optical System According to Third Example (see Fig. 9)

Unlike the first and second examples, according to the third example, the variable-magnification optical system OS includes a first lens group GR1, a second lens group GR2, a third lens group GR3, a fourth lens group GR4, and a fifth lens group GR5 in this order from the object side to the image plane side. The power arrangement of this variable-magnification optical system OS is positive, negative, positive, positive, and positive.

<First Lens Group>

The first lens group GR1 includes a first lens L1, a second lens L2, and a third lens L3 in this order from the object side to the image plane side.

The lenses of the first lens group GR1 have the following characteristics:

(a) the first lens L1: a negative meniscus lens with a convex surface on the object side;
(b) the second lens L2: a positive meniscus lens with a convex surface on the object side; and
(c) the third lens L3: a positive meniscus lens with a convex surface on the object side.

The first lens L1 and the second lens L2 are bonded at the lens surfaces s2 and s3 so as to form a cemented lens.

<Second Lens Group>

The second lens group GR2 includes a fourth lens L4, a fifth lens L5, and a sixth lens L6, a seventh lens L7, and an eighth lens L8 in this order from the object side to the image plane side.

The lenses of the second lens group GR2 have the following characteristics:

(a) the fourth lens L4: a negative meniscus lens with a convex surface on the object side;
(b) the fifth lens L5: a positive meniscus lens with a concave surface on the object side;
(c) the sixth lens L6: a negative lens with two concave surfaces;
(d) the seventh lens L7: a positive meniscus lens with a convex surface on the object side; and
(e) the eighth lens L8: a negative lens with two concave surfaces.

The fifth lens L5 and the sixth lens L6 are bonded at the lens surfaces s10 and s11 so as to form a cemented lens.

<Third Lens Group>

The third lens group GR3 includes an optical aperture ST, a ninth lens L9, and a tenth lens L10.

The optical aperture ST and the lenses of the third lens group GR3 have the following characteristics:

(a) the optical aperture ST: like that according to the first or second example, an aperture that partially blocks a light beam (the optical aperture ST is also referred to as "s17" and is integrated into the third lens group GR3);

(b) the ninth lens L9: a negative meniscus lens with a convex surface on the object side; and

(c) the tenth lens L10: a positive lens with two convex surfaces.

The ninth lens L9 and the tenth lens L10 are bonded at the lens surfaces s19 and s20 so as to form a cemented lens.

<Fourth Lens Group>

The fourth lens group GR4 includes an eleventh lens L11 and a twelfth lens L12.

The lenses of the fourth lens group GR4 have the following characteristics:

(a) the eleventh lens L11: a positive meniscus lens with a convex surface on the object side; and

(b) the twelfth lens L12: a negative lens with two concave surfaces.

<Fifth Lens Group>

The fifth lens group GR5 includes a thirteenth lens L13, a fourteenth lens L14, and a fifteenth lens L15.

The lenses of the fifth lens group GR5 have the following characteristics:

(a) the thirteenth lens L13: a positive lens with two convex surfaces (note that s27* is an aspherical surface);

(b) the fourteenth lens L14: a negative lens with two concave surfaces; and

(c) the fifteenth lens L15: a positive lens with two convex surfaces.

2-1-4. Structure of Variable-Magnification Optical System According to Fourth Example (see Fig. 13)

Like the third example, according to the fourth example, the variable-magnification optical system OS includes a first lens group GR1, a second lens group GR2, a third lens group GR3, a fourth lens group GR4, and a fifth lens group GR5 in this order from the object side to the image plane side. In addition, like the third example, the power arrangement of this variable-magnification optical system OS is positive, negative, positive, positive, and positive.

<First Lens Group>

The first lens group GR1 includes a first lens L1, a second lens L2, and a third lens L3 in this order from the object side to the image plane side.

The lenses of the first lens group GR1 have the following characteristics:

(a) the first lens L1: a negative meniscus lens with a convex surface on the object side;

(b) the second lens L2: a positive lens with two convex surfaces; and

(c) the third lens L3: a positive meniscus lens with a convex surface on the object side.

The first lens L1 and the second lens L2 are bonded at the lens surfaces s2 and s3 so as to form a cemented lens.

<Second Lens Group>

The second lens group GR2 includes a fourth lens L4, a fifth lens L5, and a sixth lens L6, a seventh lens L7, and an eighth lens L8 in this order from the object side to the image plane side.

The lenses of the second lens group GR2 have the following characteristics:

(a) the fourth lens L4: a negative meniscus lens with a convex surface on the object side;

(b) the fifth lens L5: a positive meniscus lens with a concave surface on the object side;

(c) the sixth lens L6: a negative lens with two concave surfaces;

(d) the seventh lens L7: a positive lens with two convex surfaces; and

(e) the eighth lens L8: a negative lens with two concave surfaces.

The fifth lens L5 and the sixth lens L6 are bonded at the lens surfaces s10 and s11 so as to form a cemented lens.

<Third Lens Group>

The third lens group GR3 includes an optical aperture ST, a ninth lens L9, and a tenth lens L10.

The optical aperture ST and the lenses of the third lens group GR3 have the following characteristics:

(a) the optical aperture ST: like that according to the first to third examples, an aperture that partially blocks a light beam (the optical aperture ST is also referred to as "s17" and is integrated into the third lens group GR3);
(b) the ninth lens L9: a negative meniscus lens with a convex surface on the object side; and
(c) the tenth lens L10: a positive lens with two convex surfaces.

The ninth lens L9 and the tenth lens L10 are bonded at the lens surfaces s19 and s20 so as to form a cemented lens.

<Fourth Lens Group>

The fourth lens group GR4 includes an eleventh lens L11 and a twelfth lens L12.

The lenses of the fourth lens group GR4 have the following characteristics:

(a) the eleventh lens L11: a positive lens with two convex surfaces; and
(b) the twelfth lens L12: a negative lens with two concave surfaces.

<Fifth Lens Group>

The fifth lens group GR5 includes a thirteenth lens L13, a fourteenth lens L14, and a fifteenth lens L15.

The lenses of the fifth lens group GR5 have the following characteristics:

(a) the thirteenth lens L13: a positive meniscus lens with a convex surface on the object side (note that s27* is an aspherical surface);
(b) the fourteenth lens L14: a negative meniscus lens with a convex surface on the object side; and
(c) the fifteenth lens L15: a positive lens with two convex surfaces.

The fourteenth lens L14 and the fifteenth lens L15 are bonded at the lens surfaces s29 and s30 so as to form a cemented lens.

2-1-5. Structure of Variable-Magnification Optical System According to Fifth Example (see Fig. 17)

Like the third and fourth examples, according to the fifth example, the variable-magnification optical system OS includes a first lens group GR1, a second lens group GR2, a third lens group GR3, a fourth lens group GR4, and a fifth lens group GR5 in this order from the object side to the image plane side. In addition, like the third and fourth examples, the power arrangement of this variable-magnification optical system OS is positive, negative, positive, positive, and positive.

<First Lens Group>

The first lens group GR1 includes a first lens L1, a second lens L2, and a third lens L3 in this order from the object side to the image plane side.

The lenses of the first lens group GR1 have the following characteristics:

(a) the first lens L1: a negative meniscus lens with a convex surface on the object side;
(b) the second lens L2: a positive lens with two convex surfaces; and
(c) the third lens L3: a positive meniscus lens with a convex surface on the object side.

The first lens L1 and the second lens L2 are bonded at the lens surfaces s2 and s3 so as to form a cemented lens.

<Second Lens Group>

The second lens group GR2 includes a fourth lens L4, a fifth lens L5, and a sixth lens L6, and a seventh lens L7 in this order from the object side to the image plane side.

The lenses of the second lens group GR2 have the following characteristics:

(a) the fourth lens L4: a negative meniscus lens with a convex surface on the object side;
(b) the fifth lens L5: a negative lens with two concave surfaces;
(c) the sixth lens L6: a positive lens with two convex surfaces;
(d) the seventh lens L7: a negative lens with two concave surfaces.

<Third Lens Group>

The third lens group GR3 includes an optical aperture ST, an eighth lens L8, and a ninth lens L9.
The optical aperture ST and the lenses of the third lens group GR3 have the following characteristics:

(a) the optical aperture ST: like that according to the first to fourth examples, an aperture that partially blocks a light beam (the optical aperture ST is also referred to as "s15" and is integrated into the third lens group GR3);
(b) the eighth lens L8: a negative meniscus lens with a convex surface on the object side; and
(c) the ninth lens L9: a positive lens with two convex surfaces.

The eighth lens L8 and the ninth lens L9 are bonded at the lens surfaces s17 and s18 so as to form a cemented lens.

<Fourth Lens Group>

The fourth lens group GR4 includes a tenth lens L10 and an eleventh lens L11.
The lenses of the fourth lens group GR4 have the following characteristics:

(a) the tenth lens L10: a positive meniscus lens with a convex surface on the object side; and
(b) the eleventh lens L11: a negative lens with two concave surfaces.

<Fifth Lens Group>

The fifth lens group GR5 includes a twelfth lens L12, a thirteenth lens L13, and a fourteenth lens L14.
The lenses of the fifth lens group GR5 have the following characteristics:

(a) the twelfth lens L12: a positive meniscus lens with a convex surface on the object side (note that s25[*] is an aspherical surface);
(b) the thirteenth lens L13: a negative meniscus lens with a convex surface on the object side; and
(c) the fourteenth lens L14: a positive lens with two convex surfaces.

The thirteenth lens L13 and the fourteenth lens L14 are bonded at the lens surfaces s27 and s28 so as to form a cemented lens.

2-1-6. Structure of Variable-Magnification Optical System According to Sixth Example (see Fig. 21)

Like the third to fifth examples, according to the sixth example, the variable-magnification optical system OS includes a first lens group GR1, a second lens group GR2, a third lens group GR3, a fourth lens group GR4, and a fifth lens group GR5 in this order from the object side to the image plane side. In addition, like the third to fifth examples, the power arrangement of this variable-magnification optical system OS is positive, negative, positive, positive, and positive.

<First Lens Group>

The first lens group GR1 includes a first lens L1, a second lens L2, and a third lens L3 in this order from the object side to the image plane side.
The lenses of the first lens group GR1 have the following characteristics:

(a) the first lens L1: a negative meniscus lens with a convex surface on the object side;
(b) the second lens L2: a positive lens with two convex surfaces; and
(c) the third lens L3: a positive meniscus lens with a convex surface on the object side.

The first lens L1 and the second lens L2 are bonded at the lens surfaces s2 and s3 so as to form a cemented lens.

<Second Lens Group>

The second lens group GR2 includes a fourth lens L4, a fifth lens L5, and a sixth lens L6, and a seventh lens L7 in this order from the object side to the image plane side.
The lenses of the second lens group GR2 have the following characteristics:

(a) the fourth lens L4: a negative meniscus lens with a convex surface on the object side (note that s7* is an aspherical surface);
(b) the fifth lens L5: a negative lens with two concave surfaces;
(c) the sixth lens L6: a positive lens with two convex surfaces;
(d) the seventh lens L7: a negative meniscus lens with a concave surface on the object side.

<Third Lens Group>

The third lens group GR3 includes an optical aperture ST, an eighth lens L8, and a ninth lens L9.
The optical aperture ST and the lenses of the third lens group GR3 have the following characteristics:

(a) the optical aperture ST: like that according to the first to fifth examples, an aperture that partially blocks a light beam (the optical aperture ST is also referred to as "s15" and is integrated into the third lens group GR3);
(b) the eighth lens L8: a negative meniscus lens with a convex surface on the object side; and
(c) the ninth lens L9: a positive meniscus lens with a convex surface on the object side.

The eighth lens L8 and the ninth lens L9 are bonded at the lens surfaces s17 and s18 so as to form a cemented lens.

<Fourth Lens Group>

The fourth lens group GR4 includes a tenth lens L10 and an eleventh lens L11.
The lenses of the fourth lens group GR4 have the following characteristics:

(a) the tenth lens L10: a positive lens with two convex surfaces; and
(b) the eleventh lens L11: a negative lens with two concave surfaces (note that s23* is an aspherical surface).

<Fifth Lens Group>

The fifth lens group GR5 includes a twelfth lens L12 and a thirteenth lens L13.
The lenses of the fifth lens group GR5 have the following characteristics:

(a) the twelfth lens L12: a negative meniscus lens with a convex surface on the object side; and
(b) the thirteenth lens L13: a positive lens with two convex surfaces.

2-1-7. Structure of Variable-Magnification Optical System According to Seventh Example (see Fig. 25)

Like the third to sixth examples, according to the seventh example, the variable-magnification optical system OS includes a first lens group GR1, a second lens group GR2, a third lens group GR3, a fourth lens group GR4, and a fifth lens group GR5 in this order from the object side to the image plane side. However, unlike the third to sixth examples, the power arrangement of this variable-magnification optical system OS is positive, negative, positive, negative, and positive. In addition, the variable-magnification optical system OS according to the seventh example includes no aspherical surfaces.

<First Lens Group>

The first lens group GR1 includes a first lens L1, a second lens L2, and a third lens L3 in this order from the object side to the image plane side.
The lenses of the first lens group GR1 have the following characteristics:

(a) the first lens L1: a negative meniscus lens with a convex surface on the object side;
(b) the second lens L2: a positive meniscus lens with a convex surface on the object side; and
(c) the third lens L3: a positive meniscus lens with a convex surface on the object side.

The first lens L1 and the second lens L2 are bonded at the lens surfaces s2 and s3 so as to form a cemented lens.

<Second Lens Group>

The second lens group GR2 includes a fourth lens L4, a fifth lens L5, and a sixth lens L6, a seventh lens L7, and an eighth lens L8 in this order from the object side to the image plane side.
The lenses of the second lens group GR2 have the following characteristics:

(a) the fourth lens L4: a negative meniscus lens with a convex surface on the object side;
(b) the fifth lens L5: a positive meniscus lens with a concave surface on the object side;
(c) the sixth lens L6: a negative lens with two concave surfaces;
(d) the seventh lens L7: a positive lens with
two convex surfaces; and
(e) the eighth lens L8: a negative lens with two concave surfaces.

<Third Lens Group>

The third lens group GR3 includes an optical aperture ST, a ninth lens L9, and a tenth lens L10.
The optical aperture ST and the lenses of the third lens group GR3 have the following characteristics:

(a) the optical aperture ST: like that according to the first to sixth examples, an aperture that partially blocks a light beam (the optical aperture ST is also referred to as "s17" and is integrated into the third lens group GR3);
(b) the ninth lens L9: a negative meniscus lens with a convex surface on the object side;
(c) the tenth lens L10: a positive lens with two convex surfaces.

The ninth lens L9 and the tenth lens L10 are bonded at the lens surfaces s19 and s20 so as to form a cemented lens.

<Fourth Lens Group>

The fourth lens group GR4 includes an eleventh lens L11 and a twelfth lens L12.
The lenses of the fourth lens group GR4 have the following characteristics:

(a) the eleventh lens L11: a positive lens with two convex surfaces; and the twelfth lens L12: a negative meniscus lens with a concave surface on the object side.

<Fifth Lens Group>

The fifth lens group GR5 includes a thirteenth lens L13, a fourteenth lens L14, a fifteenth lens L15, and a sixteenth lens L16.
The lenses of the fifth lens group GR5 have the following characteristics:

(a) the thirteenth lens L13: a positive lens with two convex surfaces;
(b) the fourteenth lens L14: a negative lens with two concave surfaces;
(c) the fifteenth lens L15: a positive meniscus lens with a concave surface on the object side; and
(d) the sixteenth lens L16: a positive lens with two convex surfaces.

2-2. Construction Data of Variable-Magnification Optical Systems According to First to Seventh Examples

Construction data of the variable-magnification optical systems OS according to the first to seventh examples are described next with reference to Tables 1 to 13.
In Tables 1 to 13, a symbol "ri" (mm) denotes the radius of curvature of each surface si. Note that a symbol "*" denotes an aspherical surface. A symbol "di" (mm) denotes a distance between the ith surface si and the (i+1)th surface si+1 on a light axis. When the distance between the surfaces (distance between the lens groups) on a light axis varies by zooming, the symbol "di" at a wide-angle position (W), the symbol "di" at a middle focal point (M), and the symbol "di" at a telephoto position (T) are written in this order.

Additionally, symbols "Ni" and "υi" denote the index of refraction Nd and the Abbe number vd of a medium between the surfaces (di) on a light axis, respectively. Note that the index of refraction Nd and the Abbe number vd are determined for the d-line (wavelength = 587.56 nm).

The term "focal length position" refers to one of (W), (M), and (T), that is, the wide-angle position (W: the minimum focal length), the middle focal position (M), and the telephoto position (T: the maximum focal length). The symbols "f" and "FNo." respectively indicate the focal lengths (mm) and the F numbers (FNo.) of the variable-magnification optical system for the focal positions (W), (M), and (T).

The above-described aspherical surface is defined as follows:

$$X(H) = C_0 \cdot H^2 / \{1 + \sqrt{(1 - \varepsilon \cdot C_0^2 \cdot H^2)}\} + \sum Aj \cdot H^j \qquad \dots (1)$$

where
H = the height from the light axis AX in the vertical direction,
X(H) = the displacement at the height H in the direction of the light axis AX (sag),
$C_0$ = the paraxial curvature (i.e., 1/ri),
ε = the quadratic curved surface parameter,
j = the order of the aspherical surface, and
Aj = the jth-order aspherical coefficient.

Here, the following tables show data relating to the aspherical surfaces (aspherical surface data). Note that the coefficient for data in an entry without any number is zero. "E-n" represents "$\times 10^{-n}$" for all the following tables.

2-2-1. Construction Data of Variable-Magnification Optical Systems according to First Example

# Table 1

| First Example | | | Focal Length Position | | | (W)~(M)~(T) | | | |
|---|---|---|---|---|---|---|---|---|---|
| | | | f[mm] | | | 16.4~35.8~78.0 | | | |
| | | | FNo. | | | 3.61~4.50~4.64 | | | |
| i | ri[mm] | i | di[mm] | i | Ni | νi | Elemnt | | |
| 1 | 800.109 | 1 | 2.000 | 1 | 1.84666 | 23.78 | L1 | | GR1 (+) |
| 2 | 71.245 | 2 | 0.010 | 2 | 1.51400 | 42.83 | L2 | | |
| 3 | 71.245 | 3 | 6.748 | 3 | 1.83500 | 42.98 | | | |
| 4 | −1157.957 | 4 | 0.150 | | | | L3 | | |
| 5 | 54.727 | 5 | 4.937 | 4 | 1.83500 | 42.98 | | | |
| 6 | 126.408 | 6 | 1.834~19.221~37.207 | | | | | | |
| 7* | 110.474 | 7 | 1.250 | 5 | 1.76743 | 49.48 | L4 | | GR2 (−) |
| 8 | 12.655 | 8 | 7.351 | | | | | | |
| 9 | −28.246 | 9 | 2.190 | 6 | 1.80518 | 25.46 | L5 | | |
| 10 | −18.235 | 10 | 0.010 | 7 | 1.51400 | 42.83 | | | |
| 11 | −18.235 | 11 | 1.000 | 8 | 1.88300 | 40.80 | L6 | | |
| 12 | 118.256 | 12 | 0.915 | | | | | | |
| 13 | 48.829 | 13 | 3.562 | 9 | 1.76182 | 26.61 | L7 | | |
| 14 | −27.195 | 14 | 1.773 | | | | | | |
| 15 | −18.148 | 15 | 1.200 | 10 | 1.88300 | 40.80 | L8 | | |
| 16 | −34.493 | 16 | 16.744~6.805~0.800 | | | | | | |
| 17 | ∞ | 17 | 0.852 | | | | ST | | GR3 (+) |
| 18 | 29.796 | 18 | 1.000 | 11 | 1.83500 | 42.98 | L9 | | |
| 19 | 17.086 | 19 | 0.010 | 12 | 1.51400 | 42.83 | | | |
| 20 | 17.086 | 20 | 4.024 | 13 | 1.56883 | 56.04 | L10 | | |
| 21 | −1654.917 | 21 | 10.106~2.973~0.600 | | | | | | |
| 22 | 16.419 | 22 | 6.949 | 14 | 1.51680 | 64.20 | L11 | | GR4 (+) |
| 23 | −52.956 | 23 | 0.980 | | | | | | |
| 24 | −591.972 | 24 | 1.685 | 15 | 1.76743 | 49.48 | L12 | | |
| 25* | 45.560 | 25 | 2.536 | | | | | | |
| 26 | −772.135 | 26 | 1.400 | 16 | 1.90366 | 31.32 | L13 | | |
| 27 | 21.847 | 27 | 0.010 | 17 | 1.51400 | 42.83 | | | |
| 28 | 21.847 | 28 | 6.748 | 18 | 1.51680 | 64.20 | L14 | | |
| 29 | −21.845 | | | | | | | | |

# Table 2

| First Example | | | |
|---|---|---|---|
| Aspherical surface data for 7th surface (i = 7) | | Aspherical surface data for 25th surface (i = 25) | |
| ε | 1.0000 | ε | 1.0000 |

(continued)

| First Example | | | |
|---|---|---|---|
| Aspherical surface data for 7th surface (i = 7) | | Aspherical surface data for 25th surface (i = 25) | |
| A4 | 0.23830 E-04 | A4 | 0.54171 E-04 |
| A6 | -0.50335 E-07 | A6 | 0.13027 E-06 |
| A8 | 0.17795 E-09 | A8 | -0.14452 E-09 |
| A10 | -0.65132 E-12 | A10 | 0.69268 E-11 |
| A12 | 0.16069 E-14 | A12 | 0.25530 E-13 |

2-2-2. Construction Data of Variable-Magnification Optical Systems according to Second Example

## Table 3

| Second Example | Focal Length Position | | | | (W)~(M)~(T) | | |
|---|---|---|---|---|---|---|---|
| | f[mm] | | | | 16.4~35.8~78.0 | | |
| | FNo. | | | | 3.60~4.10~4.63 | | |

| i | ri[mm] | i | di[mm] | i | Ni | νi | Elemnt |
|---|---|---|---|---|---|---|---|
| 1 | 3802.426 | | | | | | |
| | | 1 | 1.999 | 1 | 1.84666 | 23.78 | L1 |
| 2 | 80.257 | | | | | | (GR1 +) |
| | | 2 | 0.010 | 2 | 1.51400 | 42.83 | |
| 3 | 80.257 | | | | | | |
| | | 3 | 6.420 | 3 | 1.83500 | 42.98 | L2 |
| 4 | −679.556 | | | | | | |
| | | 4 | 0.150 | | | | |
| 5 | 54.770 | | | | | | |
| | | 5 | 5.009 | 4 | 1.83500 | 42.98 | L3 |
| 6 | 124.828 | | | | | | |
| | | 6 | 1.865~19.477~38.042 | | | | |
| 7 | 106.273 * | | | | | | |
| | | 7 | 1.300 | 5 | 1.76743 | 49.48 | L4 |
| 8 | 12.466 | | | | | | |
| | | 8 | 7.872 | | | | |
| 9 | −24.954 | | | | | | (GR2 −) |
| | | 9 | 1.000 | 6 | 1.88300 | 40.80 | L5 |
| 10 | 142.122 | | | | | | |
| | | 10 | 0.855 | | | | |
| 11 | 49.118 | | | | | | |
| | | 11 | 3.885 | 7 | 1.76182 | 26.61 | L6 |
| 12 | −26.125 | | | | | | |
| | | 12 | 1.979 | | | | |
| 13 | −17.129 | | | | | | |
| | | 13 | 1.000 | 8 | 1.58913 | 61.25 | L7 |
| 14 | −39.191 | | | | | | |
| | | 14 | 17.938~7.139~0.800 | | | | |
| 15 | ∞ | | | | | | ST |
| | | 15 | 0.800 | | | | |
| 16 | 27.049 | | | | | | |
| | | 16 | 1.000 | 9 | 1.83500 | 42.98 | L8 (GR3 +) |
| 17 | 16.950 | | | | | | |
| | | 17 | 0.010 | 10 | 1.51400 | 42.83 | |
| 18 | 16.950 | | | | | | |
| | | 18 | 3.967 | 11 | 1.51742 | 52.15 | L9 |
| 19 | −1775.064 | | | | | | |
| | | 19 | 10.742~3.519~1.000 | | | | |
| 20 | 16.287 | | | | | | |
| | | 20 | 7.123 | 12 | 1.48749 | 70.44 | L10 |
| 21 | −44.124 | | | | | | |
| | | 21 | 0.612 | | | | |
| 22 | −207.836 | | | | | | (GR4 +) |
| | | 22 | 1.831 | 13 | 1.76743 | 49.48 | L11 |
| 23 | 52.155 * | | | | | | |
| | | 23 | 3.104 | | | | |
| 24 | 53.734 | | | | | | |
| | | 24 | 1.200 | 14 | 1.90366 | 31.32 | L12 |
| 25 | 22.841 | | | | | | |
| | | 25 | 0.010 | 15 | 1.51400 | 42.83 | |
| 26 | 22.841 | | | | | | |
| | | 26 | 6.473 | 16 | 1.51680 | 64.20 | L13 |
| 27 | −22.037 | | | | | | |

## Table 4

| Second Example | | | |
|---|---|---|---|
| Aspherical surface data for 7th surface (i = 7) | | Aspherical surface data for 23rd surface (i = 23) | |
| ε | 1.0000 | ε | 1.0000 |
| A4 | 0.23681 E-04 | A4 | 0.51302 E-04 |

(continued)

| Second Example | | | |
|---|---|---|---|
| Aspherical surface data for 7th surface (i = 7) | | Aspherical surface data for 23rd surface (i = 23) | |
| A6 | -0.44144 E-07 | A6 | 0.12759 E-06 |
| A8 | 0.15944 E-09 | A8 | -0.10918 E-09 |
| A10 | -0.66192 E-12 | A10 | 0.42092 E-1 |
| A12 | 0.17536 E-14 | A12 | 0.33919 E-13 |

2-2-3. Construction Data of Variable-Magnification Optical Systems according to Third Example

## Table 5

| Third Example | | Focal Length Position | | (W)~(M)~(T) | | |
|---|---|---|---|---|---|---|
| | | f[mm] | | 16.4~35.8~78.0 | | |
| | | FNo. | | 3.60~4.30~4.63 | | |

| i | ri[mm] | i | di[mm] | i | Ni | νi | Elemnt | |
|---|---|---|---|---|---|---|---|---|
| 1 | 363.831 | 1 | 1.900 | 1 | 1.84666 | 23.78 | L1 | GR1 (+) |
| 2 | 65.059 | 2 | 0.010 | 2 | 1.51400 | 42.83 | L2 | |
| 3 | 65.059 | 3 | 6.082 | 3 | 1.83500 | 42.98 | | |
| 4 | 1438.228 | 4 | 0.150 | | | | L3 | |
| 5 | 54.352 | 5 | 4.628 | 4 | 1.83500 | 42.98 | | |
| 6 | 126.758 | 6 | 1.597~15.272~33.548 | | | | L4 | GR2 (−) |
| 7 | 60.281 | 7 | 1.100 | 5 | 1.83500 | 42.98 | | |
| 8 | 13.782 | 8 | 5.852 | | | | L5 | |
| 9 | −177.869 | 9 | 3.374 | 6 | 1.84666 | 23.78 | | |
| 10 | −23.148 | 10 | 0.010 | 7 | 1.51400 | 42.83 | L6 | |
| 11 | −23.148 | 11 | 1.000 | 8 | 1.83500 | 42.98 | | |
| 12 | 32.385 | 12 | 0.604 | | | | L7 | |
| 13 | 19.728 | 13 | 2.747 | 9 | 1.84666 | 23.78 | | |
| 14 | 45.569 | 14 | 1.790 | | | | L8 | |
| 15 | −1182.536 | 15 | 1.000 | 10 | 1.69680 | 55.46 | | |
| 16 | 38.584 | 16 | 17.601~7.387~1.875 | | | | ST | GR3 (+) |
| 17 | ∞ | 17 | 0.800 | | | | L9 | |
| 18 | 23.295 | 18 | 1.000 | 11 | 1.83500 | 42.98 | | |
| 19 | 16.352 | 19 | 0.010 | 12 | 1.51400 | 42.83 | L10 | |
| 20 | 16.352 | 20 | 3.293 | 13 | 1.48749 | 70.44 | | |
| 21 | −174.985 | 21 | 8.691~1.000~1.000 | | | | L11 | GR4 (+) |
| 22 | 19.281 | 22 | 4.186 | 14 | 1.60311 | 60.69 | | |
| 23 | 1955.837 | 23 | 1.629 | | | | L12 | |
| 24 | −70.362 | 24 | 1.000 | 15 | 1.83500 | 42.98 | | |
| 25 | 78.647 | 25 | 6.251~3.658~0.896 | | | | L13 | GR5 (+) |
| 26 | 131.222 | 26 | 2.152 | 16 | 1.58913 | 61.25 | | |
| 27 | −148.107 * | 27 | 1.947 | | | | L14 | |
| 28 | −131.329 | 28 | 1.200 | 17 | 1.84666 | 23.78 | | |
| 29 | 89.611 | 29 | 0.856 | | | | L15 | |
| 30 | 177.073 | 30 | 5.950 | 18 | 1.48749 | 70.44 | | |
| 31 | −18.233 | | | | | | | |

Table 6

| Third Example | |
|---|---|
| Aspherical surface data for 27th surface (i = 27) | |
| ε | 1.0000 |
| A4 | 0.57871 E-04 |
| A6 | 0.89442 E-07 |
| A8 | -0.92423 E-10 |
| A10 | -0.16754 E-11 |
| A12 | 0.60971 E-14 |

2-2-4. Construction Data of Variable-Magnification Optical Systems according to Fourth Example

## Table 7

| Fourth Example | Focal Length Position | | (W)~(M)~(T) | |
|---|---|---|---|---|
| | f[mm] | | 18.4~49.2~131.3 | |
| | FNo. | | 3.60~4.60~5.80 | |

| i | ri[mm] |
|---|---|
| 1 | 285.922 |
| 2 | 69.279 |
| 3 | 69.279 |
| 4 | -526.698 |
| 5 | 60.594 |
| 6 | 191.620 |
| 7 | 76.382 |
| 8 | 15.053 |
| 9 | -40.267 |
| 10 | -33.554 |
| 11 | -33.554 |
| 12 | 46.590 |
| 13 | 27.838 |
| 14 | -34.750 |
| 15 | -24.108 |
| 16 | 116.268 |
| 17 | ∞ |
| 18 | 34.836 |
| 19 | 19.325 |
| 20 | 19.325 |
| 21 | -108.017 |
| 22 | 18.782 |
| 23 | -53.180 |
| 24 | -49.708 |
| 25 | 36.907 |
| 26 | 40.159 |
| 27* | 67.000 |
| 28 | 249.238 |
| 29 | 23.247 |
| 30 | 23.247 |
| 31 | -22.883 |

| i | di[mm] |
|---|---|
| 1 | 1.900 |
| 2 | 0.010 |
| 3 | 6.640 |
| 4 | 0.150 |
| 5 | 4.897 |
| 6 | 1.888~21.285~40.169 |
| 7 | 1.100 |
| 8 | 6.465 |
| 9 | 1.723 |
| 10 | 0.010 |
| 11 | 1.000 |
| 12 | 0.702 |
| 13 | 4.486 |
| 14 | 1.337 |
| 15 | 1.000 |
| 16 | 20.499~9.201~1.416 |
| 17 | 0.800 |
| 18 | 1.000 |
| 19 | 0.010 |
| 20 | 2.880 |
| 21 | 13.056~1.000~1.000 |
| 22 | 6.003 |
| 23 | 1.004 |
| 24 | 1.000 |
| 25 | 2.934~2.080~0.758 |
| 26 | 2.090 |
| 27 | 2.239 |
| 28 | 1.200 |
| 29 | 0.010 |
| 30 | 6.375 |

| i | Ni | $\nu$i | Elemnt | |
|---|---|---|---|---|
| 1 | 1.84666 | 23.78 | L1 | GR1 (+) |
| 2 | 1.51400 | 42.83 | | GR1 (+) |
| 3 | 1.71300 | 53.94 | L2 | GR1 (+) |
| 4 | 1.83500 | 42.98 | L3 | GR1 (+) |
| 5 | 1.83500 | 42.98 | L4 | GR2 (-) |
| 6 | 1.84666 | 23.78 | L5 | GR2 (-) |
| 7 | 1.51400 | 42.83 | | GR2 (-) |
| 8 | 1.83500 | 42.98 | L6 | GR2 (-) |
| 9 | 1.80518 | 25.46 | L7 | GR2 (-) |
| 10 | 1.74330 | 49.22 | L8 | GR2 (-) |
| | | | ST | GR3 (+) |
| 11 | 1.83400 | 37.34 | L9 | GR3 (+) |
| 12 | 1.51400 | 42.83 | | GR3 (+) |
| 13 | 1.58913 | 61.25 | L10 | GR3 (+) |
| 14 | 1.65844 | 50.85 | L11 | GR4 (+) |
| 15 | 1.83400 | 37.34 | L12 | GR4 (+) |
| 16 | 1.53048 | 55.72 | L13 | GR5 (+) |
| 17 | 1.83400 | 37.34 | L14 | GR5 (+) |
| 18 | 1.51400 | 42.83 | | GR5 (+) |
| 19 | 1.48749 | 70.44 | L15 | GR5 (+) |

Table 8

| Fourth Example | |
| --- | --- |
| Aspherical surface data for 27th surface (i = 27) | |
| ε | 1.0000 |
| A4 | 0.53447 E-04 |
| A6 | 0.47593 E-07 |
| A8 | 0.19018 E-09 |
| A10 | -0.60927 E-12 |
| A12 | 0.11678 E-13 |

2-2-5. Construction Data of Variable-Magnification Optical Systems according to Fifth Example

Table 9

| Fifth Example | Focal Length Position | (W)~(M)~(T) |
|---|---|---|
| | f[mm] | 18.4~49.2~131.3 |
| | FNo. | 4.10~4.88~5.80 |

| i | ri[mm] | i | di[mm] | i | Ni | νi | Elemnt | |
|---|---|---|---|---|---|---|---|---|
| 1 | 230.602 | 1 | 1.900 | 1 | 1.84666 | 23.78 | L1 | |
| 2 | 68.757 | 2 | 0.010 | 2 | 1.51400 | 42.83 | L2 | GR1 (+) |
| 3 | 68.757 | 3 | 6.169 | 3 | 1.69680 | 55.46 | L2 | GR1 (+) |
| 4 | -934.710 | 4 | 0.150 | | | | L3 | GR1 (+) |
| 5 | 64.119 | 5 | 4.758 | 4 | 1.83500 | 42.98 | L3 | |
| 6 | 207.184 | 6 | 2.036~21.742~41.521 | | | | L4 | |
| 7 | 81.211 | 7 | 1.100 | 5 | 1.83500 | 42.98 | L4 | GR2 (-) |
| 8 | 15.561 | 8 | 6.468 | | | | L5 | GR2 (-) |
| 9 | -47.583 | 9 | 1.100 | 6 | 1.80420 | 46.50 | L5 | GR2 (-) |
| 10 | 49.579 | 10 | 0.464 | | | | L6 | GR2 (-) |
| 11 | 26.465 | 11 | 4.317 | 7 | 1.84666 | 23.78 | L6 | |
| 12 | -57.663 | 12 | 1.557 | | | | L7 | |
| 13 | -30.235 | 13 | 1.000 | 8 | 1.74330 | 49.22 | L7 | |
| 14 | 77.249 | 14 | 22.961~9.806~1.509 | | | | ST | |
| 15 | ∞ | 15 | 0.800 | | | | ST | |
| 16 | 30.449 | 16 | 1.000 | 9 | 1.83400 | 37.34 | L8 | GR3 (+) |
| 17 | 19.980 | 17 | 0.010 | 10 | 1.51400 | 42.83 | L9 | GR3 (+) |
| 18 | 19.980 | 18 | 2.698 | 11 | 1.51680 | 64.20 | L9 | GR3 (+) |
| 19 | -116.875 | 19 | 11.614~1.000~1.000 | | | | L10 | |
| 20 | 22.043 | 20 | 4.844 | 12 | 1.69680 | 55.46 | L10 | GR4 (+) |
| 21 | 1483.019 | 21 | 1.477 | | | | L11 | GR4 (+) |
| 22 | -96.608 | 22 | 1.000 | 13 | 1.83400 | 37.34 | L11 | GR4 (+) |
| 23 | 77.087 | 23 | 5.571~2.940~0.500 | | | | L12 | |
| 24 | 53.734 | 24 | 2.042 | 14 | 1.53048 | 55.72 | L12 | GR5 (+) |
| 25 | 85.249 * | 25 | 1.926 | | | | L13 | GR5 (+) |
| 26 | 248.386 | 26 | 1.200 | 15 | 1.83400 | 37.34 | L13 | GR5 (+) |
| 27 | 23.606 | 27 | 0.010 | 16 | 1.51400 | 42.83 | L13 | GR5 (+) |
| 28 | 23.606 | 28 | 6.410 | 17 | 1.48749 | 70.44 | L14 | GR5 (+) |
| 29 | -22.566 | | | | | | | |

Table 10

| Fifth Example | |
|---|---|
| Aspherical surface data for 25th surface (i = 25) | |
| $\varepsilon$ | 1.0000 |
| A4 | 0.40684 E-04 |
| A6 | 0.21252 E-07 |
| A8 | -0.61126 E-09 |
| A10 | 0.70642 E-11 |
| A12 | -0.26669 E-13 |

2-2-6. Construction Data of Variable-Magnification Optical Systems according to Sixth Example

Table 11

| Sixth Example | Focal Length Position | | (W)~(M)~(T) | | |
|---|---|---|---|---|---|
| | f[mm] | | 16.4~37.9~87.8 | | |
| | FNo. | | 3.60~4.30~4.63 | | |

| i | ri[mm] | | i | di[mm] | i | Ni | νi | Elemnt | |
|---|---|---|---|---|---|---|---|---|---|
| 1 | 69832.398 | | 1 | 1.900 | 1 | 1.84666 | 23.78 | L1 | GR1 (+) |
| 2 | 87.784 | | 2 | 0.010 | 2 | 1.51400 | 42.83 | | |
| 3 | 87.784 | | 3 | 5.420 | 3 | 1.83500 | 42.98 | L2 | |
| 4 | −1084.305 | | 4 | 0.150 | | | | | |
| 5 | 61.592 | | 5 | 4.767 | 4 | 1.83500 | 42.98 | L3 | |
| 6 | 177.470 | | 6 | 2.024~20.572~39.948 | | | | | |
| 7 | 153.020 | * | 7 | 1.100 | 5 | 1.76743 | 49.48 | L4 | GR2 (−) |
| 8 | 14.472 | | 8 | 7.195 | | | | | |
| 9 | −34.658 | | 9 | 1.000 | 6 | 1.83500 | 42.98 | L5 | |
| 10 | 46.116 | | 10 | 1.267 | | | | | |
| 11 | 40.986 | | 11 | 4.846 | 7 | 1.72825 | 28.32 | L6 | |
| 12 | −23.738 | | 12 | 1.165 | | | | | |
| 13 | −18.839 | | 13 | 1.000 | 8 | 1.83500 | 42.98 | L7 | |
| 14 | −43.736 | | 14 | 22.521~7.900~0.800 | | | | | |
| 15 | ∞ | | 15 | 0.800 | | | | ST | GR3 (+) |
| 16 | 25.355 | | 16 | 1.000 | 9 | 1.83500 | 42.98 | L8 | |
| 17 | 15.699 | | 17 | 0.010 | 10 | 1.51400 | 42.83 | L9 | |
| 18 | 15.699 | | 18 | 4.168 | 11 | 1.58144 | 40.89 | | |
| 19 | 278.727 | | 19 | 14.328~5.606~1.000 | | | | | |
| 20 | 16.214 | | 20 | 6.828 | 12 | 1.48749 | 70.44 | L10 | GR4 (+) |
| 21 | −45.745 | | 21 | 0.999 | | | | | |
| 22 | −75.978 | | 22 | 1.700 | 13 | 1.80610 | 40.73 | L11 | |
| 23 | 48.917 | * | 23 | 2.542~2.866~4.458 | | | | | |
| 24 | 1052.587 | | 24 | 1.200 | 14 | 1.84666 | 23.78 | L12 | GR5 (+) |
| 25 | 29.850 | | 25 | 1.563 | | | | | |
| 26 | 42.739 | | 26 | 5.897 | 15 | 1.51742 | 52.15 | L13 | |
| 27 | −21.122 | | | | | | | | |

Table 12

| Sixth Example | | | |
|---|---|---|---|
| Aspherical surface data for 7th surface (i = 7) | | Aspherical surface data for 23rd surface (i = 23) | |
| ε | 1,0000 | ε | 1.0000 |
| A4 | 0.20396 E-04 | A4 | 0.50434 E-04 |

(continued)

| Sixth Example | | | |
|---|---|---|---|
| Aspherical surface data for 7th surface (i = 7) | | Aspherical surface data for 23rd surface (i = 23) | |
| A6 | -0.50827 E-07 | A6 | 0.50651 E-07 |
| A8 | 0.23502 E-09 | A8 | 0.89030 E-09 |
| A10 | -0.74945 E-12 | A10 | -0.88149 E-11 |
| A12 | 0.11891 E-14 | A12 | 0.60912 E-13 |

2-2-7. Construction Data of Variable-Magnification Optical Systems according to Seventh Example

## Table 13

| Seventh Example | Focal Length Position | | (W)~(M)~(T) | |
|---|---|---|---|---|
| | f[mm] | | 16.4~35.8~78.0 | |
| | FNo. | | 3.60~4.57~5.80 | |

| i | ri[mm] | i | di[mm] | i | Ni | νi | Elemnt | |
|---|---|---|---|---|---|---|---|---|
| 1 | 166.439 | 1 | 1.900 | 1 | 1.84666 | 23.78 | L1 | |
| 2 | 76.732 | 2 | 0.010 | 2 | 1.51400 | 42.83 | | GR1 (+) |
| 3 | 76.732 | 3 | 7.026 | 3 | 1.58913 | 61.25 | L2 | |
| 4 | 1440.611 | 4 | 0.150 | | | | | |
| 5 | 69.930 | 5 | 4.738 | 4 | 1.83500 | 42.98 | L3 | |
| 6 | 149.227 | 6 | 1.595~10.083~49.675 | | | | | |
| 7 | 66.596 | 7 | 1.100 | 5 | 1.83500 | 42.98 | L4 | |
| 8 | 13.473 | 8 | 5.784 | | | | | |
| 9 | -252.882 | 9 | 3.396 | 6 | 1.84666 | 23.78 | L5 | |
| 10 | -23.924 | 10 | 0.010 | 7 | 1.51400 | 42.83 | | GR2 (-) |
| 11 | -23.924 | 11 | 1.000 | 8 | 1.83500 | 42.98 | L6 | |
| 12 | 31.057 | 12 | 0.359 | | | | | |
| 13 | 17.827 | 13 | 4.310 | 9 | 1.68893 | 31.16 | L7 | |
| 14 | -82.265 | 14 | 1.016 | | | | | |
| 15 | -70.721 | 15 | 1.000 | 10 | 1.83500 | 42.98 | L8 | |
| 16 | 32.196 | 16 | 20.029~5.574~2.488 | | | | | |
| 17 | ∞ | 17 | 0.800 | | | | ST | |
| 18 | 19.805 | 18 | 1.000 | 11 | 1.83500 | 42.98 | L9 | GR3 (+) |
| 19 | 13.662 | 19 | 0.010 | 12 | 1.51400 | 42.83 | | |
| 20 | 13.662 | 20 | 3.036 | 13 | 1.51680 | 64.20 | L10 | |
| 21 | -90.526 | 21 | 15.710~2.180~1.000 | | | | | |
| 22 | 34.710 | 22 | 3.918 | 14 | 1.63854 | 55.45 | L11 | GR4 (-) |
| 23 | -56.506 | 23 | 2.174 | | | | | |
| 24 | 53.734 | 24 | 1.000 | 15 | 1.83500 | 42.98 | L12 | |
| 25 | -183.788 | 25 | 6.447~2.831~0.500 | | | | | |
| 26 | 136.967 | 26 | 8.783 | 16 | 1.78472 | 25.72 | L13 | |
| 27 | -28.522 | 27 | 0.716 | | | | | |
| 28 | -42.649 | 28 | 1.200 | 17 | 1.84666 | 23.78 | L14 | GR5 (+) |
| 29 | 31.460 | 29 | 2.635 | | | | | |
| 30 | -648.260 | 30 | 3.929 | 18 | 1.65844 | 50.85 | L15 | |
| 31 | -33.668 | 29 | 0.150 | | | | | |
| 32 | 37.780 | 30 | 5.294 | 19 | 1.49700 | 81.61 | L16 | |
| 33 | -86.102 | | | | | | | |

2-3. Movement of Lens Groups in Variable-Magnification Optical Systems according to First to Seventh Examples

The movement of lens groups in the variable-magnification optical systems OS according to first to seventh examples is described next.

2-3-1. ZOOMING

When zooming (variable magnification) from the wide-angle position (W) to the telephoto position (T) is performed, the variable-magnification optical system OS moves the lens group GR along the light axis AX. For example, according to the first to seventh examples, when zooming is performed, the variable-magnification optical system OS moves all the lens groups GR.

In Figs. 1, 5, 9, 13, 17, 21, and 25, a reference number is used to denote only a distance on the axis (di) that varies in accordance with zooming. An arrow "MMi" schematically shows the movement of each lens group GR when moving from the wide-angle position (W) to the middle focal length position and from the middle focal length position to the telephoto position (T). The "i" of "MMi" indicates the order of the position from the object side to the image plane side. Accordingly, the "i" corresponds to the order of the lens group GR.

The movement of each lens group GR from the wide-angle position (W) to the telephoto position (T) is described next. When the distance between the lens groups GR (group distance) is described, the description is made using the comparison between the distance between the lens groups GR at the wide-angle position (W) and the distance between the lens groups GR at the telephoto position (T). Accordingly, if the distance between the lens groups GR at the telephoto position (T) is greater than that at the wide-angle position (W), the distance between the lens groups GR is described as "increasing" from the wide-angle position (W) to the telephoto position (T) even when the distance between the lens groups GR at the middle focal length position (M) is less than that at the wide-angle position (W).

Variable-Magnification Optical Systems according to First and Second Examples

The movement of each lens group GR from the wide-angle position (W) to the telephoto position (T) is as follows:

(a) The first lens group GR1 moves towards the object side;
(b) The second lens group GR2 temporarily moves towards the image plane side and, subsequently, moves towards the object side;
(c) The third lens group GR3 moves towards the object side; and
(d) The fourth lens group GR4 moves towards the object side.

By monotonically moving at least the first lens group GR1 and the third lens group GR3 towards the object side, the variable-magnification optical systems OS according to the first and second examples increase the distance between the first lens group GR1 and the second lens group GR2 and decrease the distance between the second lens group GR2 and the third lens group GR3 and the distance between the third lens group GR3 and the fourth lens group GR4.

Variable-Magnification Optical Systems according to Third to Sixth Examples

The movement of each lens group GR of the variable-magnification optical systems OS according to the third to sixth Examples from the wide-angle position (W) to the telephoto position (T) is as follows:

(a) The first lens group GR1 moves towards the object side;
(b) The second lens group GR2 temporarily moves towards the image plane and, subsequently, moves to the object side;
(c) The third lens group GR3 moves towards the object side;
(d) The fourth lens group GR4 moves towards the object side; and
(e) The fourth lens group GR5 moves towards the object side.

By monotonically moving at least the first lens group GR1 and the third lens group GR3 towards the object side, the variable-magnification optical systems OS according to the third and fifth examples increase the distance between the first lens group GR1 and the second lens group GR2 and decrease the distance between the second lens group GR2 and the third lens group GR3, the distance between the third lens group GR3 and the fourth lens group GR4, and the distance between the fourth lens group GR4 and the fifth lens group GR5.

However, by monotonically moving at least the first lens group GR1 and the third lens group GR3 towards the object side, the variable-magnification optical system OS according to the sixth example increases the distance between the first lens group GR1 and the second lens group GR2, decreases the distance between the second lens group GR2 and the third lens group GR3 and the distance between the third lens group GR3 and the fourth lens group GR4, and increases the distance between the fourth lens group GR4 and the fifth lens group GR5.

Variable-Magnification Optical System according to Seventh Example

The movement of each lens group GR of the variable-magnification optical system OS according to the seventh example from the wide-angle position (W) to the telephoto position (T) is as follows:

(a) The first lens group GR1 moves towards the object side;
(b) The second lens group GR2 moves towards the object side;
(c) The third lens group GR3 moves towards the object side;
(d) The fourth lens group GR4 moves towards the object side; and
(e) The fourth lens group GR5 moves towards the object side.

However, like the third to fifth examples, by monotonically moving at least the first lens group GR1 and the third lens group GR3 towards the object side, the variable-magnification optical system OS according to the seventh example increases the distance between the first lens group GR1 and the second lens group GR2 and decreases the distance between the second lens group GR2 and the third lens group GR3, the distance between the third lens group GR3 and the fourth lens group GR4, and the distance between the fourth lens group GR4 and the fifth lens group GR5.

2-3-2. Focusing

When performing focusing, the variable-magnification optical systems OS according to the first to seventh examples move the second lens group GR2. The reason for this is as follows. Since the second lens group GR2 has the highest negative power among the lens groups GR in the variable-magnification optical system OS, the moving distance needed for focusing is relatively short. In addition, the occurrence of various aberrations caused by the focusing can be relatively decreased.

2-4. Aberrations in Variable-Magnification Optical Systems according to First to Seventh Examples

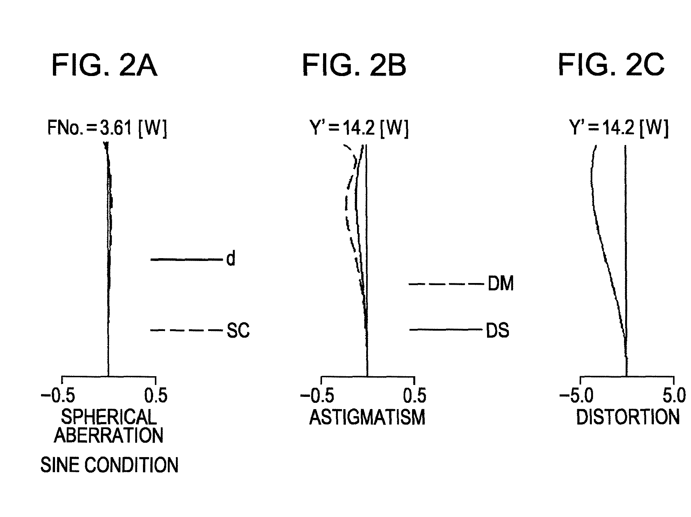

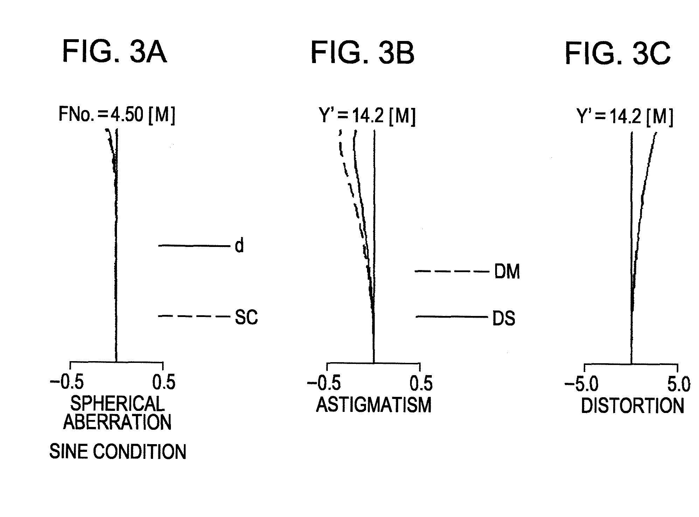

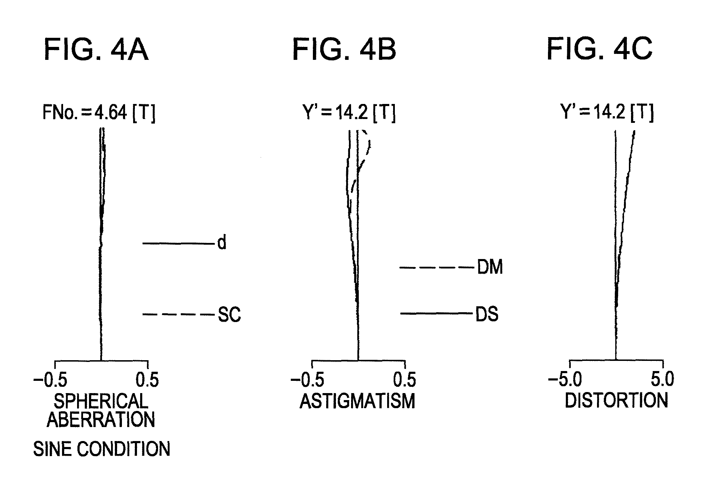

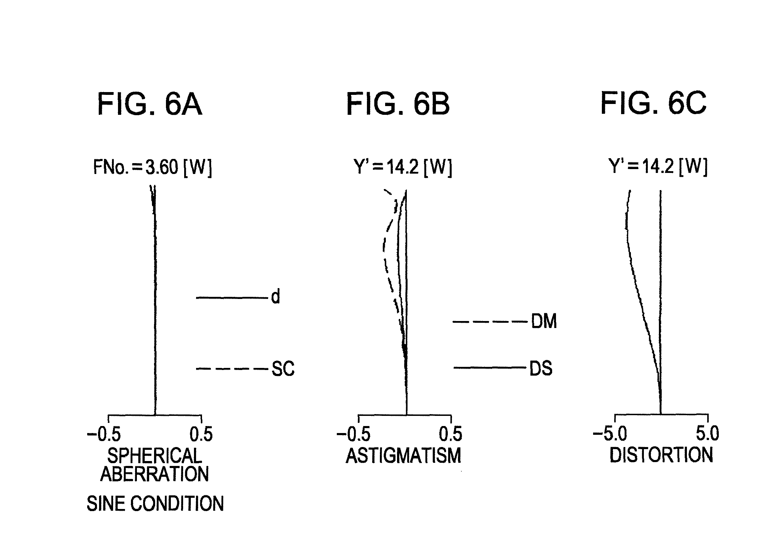

According to the first to seventh examples, the aberrations occurring when the variable-magnification optical systems OS perform zooming are shown in Figs. 2A to 4C, Figs. 6A to 8C, Figs. 10A to 12C, Figs. 14A to 16C, Figs. 18A to 20C, Figs. 22A to 24C, and Figs. 26A to 28C. Note that information in Figs. 6A to 8C, Figs. 10A to 12C, Figs. 14A to 16C, Figs. 18A to 20C, Figs. 22A to 24C, and Figs. 26A to 28C is shown in the same manner as in Figs. 2A to 4C.
More specifically, Figs. 2A to 2C show the aberrations at the wide-angle position (W). Figs. 3A to 3C show the aberrations in the middle focal position (M). Figs. 4A to 4C show the aberrations at the telephoto position (T).
In addition, Figs. 2A, 3A, and 4A illustrate the spherical aberrations and sine conditions. In Figs. 2A, 3A, and 4A, the ordinate represents the height of the incident ray. The solid line d indicates the spherical aberration (mm) for the d-line whereas the dotted line SC indicates the amount of offense against the sine condition (mm).
Figs. 2B, 3B, and 4B indicate the astigmatism. In Figs. 2B, 3B, and 4B, the ordinate represents the maximum image height (Y': mm). The dotted line DM indicates the astigmatism (mm) in the meridional plane for the d-line whereas the solid line DS indicates the astigmatism (mm) in the sagittal plane for the d-line.
Figs. 2C, 3C, and 4C indicate the distortion. In Figs. 2C, 3C, and 4C, the ordinate represents the maximum image height (Y': mm). The solid line indicates the distortion (%) for the d-line.

3. Examples of Various Features

As noted above, each of the variable-magnification optical systems OS includes a plurality of lens groups GR. In particular, in all the above-described examples, the variable-magnification optical systems OS include at least the first lens group GR1 having a positive power, the second lens group GR2 having a negative power, and the third lens group GR3 having a positive power in this order from the object side to the image plane side.
According to the first and second examples, the variable-magnification optical systems OS further include the fourth lens group GR4 on the image plane side of the third lens group GR3. That is, according to the first and second examples, the variable-magnification optical systems OS include four lens groups (i.e., the lens groups GR1 to GR4).
In contrast, according to the third and seventh examples, the variable-magnification optical systems OS further include two lens groups (i.e., the lens groups GR4 and GR5) on the image plane side of the third lens group GR3. That is, according to the third and seventh examples, the variable-magnification optical systems OS include five lens groups (i.e., the lens groups GR1 to GR5).
However, according to the third to sixth examples, the variable-magnification optical systems OS include the fourth lens groups GR4 and GR5 having a positive power. In contrast, according to the seventh example, the variable-magnification optical system OS include the fourth lens group GR4 having a negative power and the fifth lens group GR5 having a positive power.

Therefore, according to the first to seventh examples, the variable-magnification optical systems OS have the subsequent lens groups realized by at least one lens group having a positive power on the image plane side of the third lens group GR3. That is, in the variable-magnification optical systems OS according to the first and second examples, the fourth lens group GR4 corresponds to the subsequent lens group. In the variable-magnification optical systems OS according to the third to seventh examples, the fourth lens group GR4 and the fifth lens group GR5 correspond to the subsequent lens groups.

In addition, according to all the above-described examples, the variable-magnification optical systems OS move all the lens groups GR when performing the magnification from the wide-angle position (W) to the telephoto position (T). However, by monotonically moving at least the first lens group GR1 and the third lens group GR3 towards the object side, the variable-magnification optical systems OS increase the distance between the first lens group GR1 and the second lens group GR2 and decrease the distance between the second lens group GR2 and the third lens group GR3 and the distance between the third lens group GR3 and the lens group located closest to the object among the subsequent lens groups (i.e., the fourth lens group GR4).

Therefore, the distance between the first lens group GR1 and the third lens group GR3 is the shortest at the wide-angle position (W). Additionally, when zooming is carried out, light emitted from the object is received by moving the first lens group GR1 in the forward direction towards the object (i.e., a front optical element focusing method). Thus, the size of the first lens group GR1 (in particular, the size of the front optical element) can be relatively reduced.

Additionally, in particular, in the variable-magnification optical systems OS according to all the above-described examples, the third lens group GR3 includes the following two lenses: a negative lens on the object side and a positive lens on the image plane side.

The third lens group GR3 having such a power arrangement induces a retrofocus power arrangement therein. Accordingly, the back focus in the variable-magnification optical system OS tends to be long. However, since the third lens group GR3 includes only two lenses, an increase in the length of the variable-magnification optical system OS due to the thicknesses of the lenses can be relatively reduced. Consequently, this variable-magnification optical system OS can provide a long back focus without increasing the length thereof.

In addition, since the third lens group GR3 includes a negative lens and a positive lens, this variable-magnification optical system OS can efficiently correct chromatic aberrations. Furthermore, if the negative lens and the positive lens of the third lens group GR3 form a cemented lens, the length of the variable-magnification optical system OS can be further reduced. In addition, the cemented lens formed by the negative lens and the positive lens can relatively reduce the eccentric error and the distance error between the lenses.

In addition, it is desirable that the third lens group GR3 and the subsequent lens groups in the variable-magnification optical system OS satisfy the following condition (conditional expression (1)):

$$0.5 < f3/fGS(w) < 5 \qquad \qquad \dots (A)$$

where
f3 (mm) = the focal length of the third lens group GR3
fGS(w) (mm) = the combined focal length of the subsequent lens groups at the wide-angle position (W).

Note that conditional expression (A) defines the range required for maintaining a good balance between the high performance of correction of the aberration and the short length of the variable-magnification optical system OS on the basis of the ratio of the focal length of the third lens group GR3 to the subsequent lens group (i.e., the power ratio).

For example, if a value of f3/fGS(w) is less than or equal to the lower limit of conditional expression (A), the focal length of the third lens group GR3 is short or the focal length of the subsequent lens group is long. Accordingly, in such a case, the positive power of the third lens group GR3 is relatively strong or the power of the subsequent lens group is relatively weak.

However, the third lens group GR3 is one of the lens groups GR to which a diverging light beam generated by the second lens group GR2 having a negative power is input first. Accordingly, if the positive power of the third lens group GR3 is strong, the under spherical aberration and the curvature of field occur at the telephoto position (T). In addition, if the power of the subsequent lens groups is decreased, the focal length is increased. Thus, the length of the variable-magnification optical system OS is increased.

In contrast, if a value of f3/fGS(w) is greater than or equal to the upper limit of conditional expression (A), the focal length of the third lens group GR3 is long or the focal length of the subsequent lens groups is short. Accordingly, in such a case, the positive power of the third lens group GR3 is relatively weak or the power of the subsequent lens group is relatively strong.

If the positive power of the third lens group GR3 is decreased, the third lens group GR3 cannot sufficiently converge the diverging light beam input from the second lens group GR2. Thus, the over spherical aberration and the curvature of field occur at the telephoto position (T). In addition, if the power of the subsequent lens groups is increased, the focal length is decreased. However, since the power is increased, aberrations easily occur. To reduce the aberrations, the number of lenses should be increased. This prevents the length of the variable-magnification optical system OS from being reduced.

Accordingly, if the focal length of the third lens group GR3 and the combined focal length of the subsequent lens groups are determined so that conditional expression A is satisfied, the length of the variable-magnification optical system OS can be reduced. In addition, the occurrence of under spherical aberration and over spherical aberration can be reduced.

When the variable-magnification optical systems OS according to the first to seventh examples satisfy conditional expression A, a value of f3/fGS(w) is as follows:

| | |
|---|---|
| the first example: | 2.124 |
| the second example: | 2.147 |
| the third example: | 1.518 |
| the fourth example: | 1.425 |
| the fifth example: | 1.485 |
| the sixth example: | 1.568 |
| the seventh example: | 0.895 |

Furthermore, it is desirable that the following condition (A') in the conditional expression A is satisfied:

$$0.7 < f3/fGS(w) < 3 \qquad\qquad ... (A')$$

In addition, it is desirable that the third lens group GR3 of the variable-magnification optical system OS satisfies the following conditional expression (B) (conditional expression (2)):

$$0.1 < f3/fall(w) < 8 \qquad\qquad ... (B)$$

where
f3 (mm) = the focal length of the third lens group GR3
fall(w) (mm) = the focal length of the whole variable-magnification optical system OS at the wide-angle position (W).

Conditional expression B defines the range required for achieving a good balance between the extension of the back focus and the reduction in the length of the variable-magnification optical system OS.

For example, if the focal length of the third lens group GR3 is short and, therefore, a value of f3/fall(w) is less than or equal to the lower limit of conditional expression B, the positive power of the third lens group GR3 is relatively increased. Accordingly, although the third lens group GR3 has a retrofocus power arrangement (lens arrangement), the back focus is decreased.

In contrast, if the focal length of the third lens group GR3 is long and, therefore, a value of f3/fall(w) is greater than or equal to the upper limit of conditional expression B, the length of the variable-magnification optical system OS is increased due to the long focal length.

Consequently, when the focal length of the third lens group GR3 and the focal length of the variable-magnification optical system OS at the wide-angle position (W) are determined so as to satisfy conditional expression B, the length of the variable-magnification optical system OS can be decreased while the back focus is increased.

When the variable-magnification optical systems OS according to the first to seventh examples satisfy conditional expression B, a value of f3/fall(w) is as follows:

| | |
|---|---|
| the first example: | 4.687 |
| the second example: | 4.791 |
| the third example: | 3.455 |

(continued)

the fourth example: 3.254
the fifth example: 3.394
the sixth example: 4.034
the seventh example: 2.463.

Furthermore, it is desirable that the following condition (B') in the conditional expression (B) is satisfied:

$$2 < f3/fall(w) < 8 \qquad \ldots (B')$$

By adjusting the focal lengths of the lenses in the third lens group GR3 and the focal length of the third lens group GR3 and adjusting the power arrangement of the lenses in the subsequent lens groups, the length of the variable-magnification optical system OS can be reliably reduced. In addition, the light beam output from the subsequent lens group can be made telecentric.

More specifically, the lenses in the subsequent lens group can have a power arrangement of positive, negative, negative, and positive. Still more specifically, to reduce the length of the variable-magnification optical system OS, the positive-negative lenses can be disposed on the object side. To provide a telecentric characteristic, negative-positive lenses can be disposed on the image plane side of the positive-negative lenses.

Since such a lens arrangement includes a positive-negative telephoto arrangement, the length of the variable-magnification optical system OS can be reduced. Furthermore, since such a lens arrangement includes a negative-positive power arrangement, the exit pupil can be long, and therefore, the output light beam can be made telecentric.

According to the first, second, and sixth examples, the variable-magnification optical systems OS have the subsequent lens group including the lenses having a power arrangement of positive, negative, negative, and positive. However, in order to correct a variety of aberrations, the third negative power may be induced by positive-negative lenses. Accordingly, in this case, the lenses of the subsequent lens group have a power arrangement of positive, negative, positive, negative, and positive. That is, the variable-magnification optical systems OS according to the third to fifth examples have such a power arrangement.

In addition, in order to sufficiently correct a variety of aberrations, it is desirable that at least one surface of the lenses in the subsequent lens groups is aspherical. For example, in the first to sixth examples, the subsequent lens group includes the following aspherical surface:

the first example: the surface s25* of the twelfth lens L12 on the image plane side in the fourth lens group GR4 (note that the twelfth lens L12 is a negative lens with two concave surfaces),
the second example: the surface s23* of the eleventh lens L11 on the image plane side in the fourth lens group GR4 (note that the eleventh lens L11 is a negative lens with two concave surfaces),
the third example: the surface s27* of the thirteenth lens L13 on the image plane side in the fifth lens group GR5 (note that the thirteenth lens L13 is a positive lens with two convex surfaces),
the fourth example: the surface s27* of the thirteenth lens L13 on the image plane side in the fifth lens group GR5 (note that the thirteenth lens L13 is a positive meniscus lens with a convex surface on the object side),
the fifth example: the surface s25* of the twelfth lens L12 on the image plane side in the fifth lens group GR5 (note that the twelfth lens L12 is a positive meniscus lens with a convex surface on the object side), and
the sixth example: the surface s23* of the eleventh lens L11 on the image plane side in the fourth lens group GR4 (note that the eleventh lens L11 is a negative lens with two concave surfaces).

In addition, it is desirable that this aspherical surface included in the lenses of the subsequent lens groups of the variable-magnification optical system OS satisfies the following conditional expression:

$$-1.5 < [X(GS) - X0(GS)]/[N'(GS) - N(GS)] < 0.05 \ldots (C)$$

where
X(GS) (mm) = the displacement in the light axis direction at a height H from the light axis of the aspherical surface in the vertical direction (note that the displacement towards the object side is negative and the displacement towards the image plane side is positive),

X0(GS) (mm) = the displacement in the light axis direction at a height H from the light axis of the reference aspherical surface in the vertical direction (note that the displacement towards the object side is negative and the displacement towards the image plane side is positive),

N(GS) (1/mm) = the index of refraction of a medium on the object side of the aspherical surface for the d-line, and

N'(GS) (1/mm) = the index of refraction of a medium on the image plane side of the aspherical surface for the d-line.

In addition, X(GS) = X0(GS) + $\sum Aj \cdot H^j$ and

$$X0(GS) = C_0 \cdot H^2 / \{1 + \sqrt{(1 - \varepsilon \cdot C_0^2 \cdot H^2)}\} + \sum Aj \cdot H^j.$$

This conditional expression (C) defines the shape of an aspherical surface required for correcting various aberrations.

Like the aspherical surface included in the lenses of the subsequent lens groups according to the first to sixth examples, if a medium is present on the object side and air is present on the image plane side, a value of [N'(GS) - N(GS)] is negative. In such a case, if a value of [X(GS) - X0(GS)]/[N'(GS) - N(GS)] is less than or equal to the lower limit of conditional expression (C), the value of [N'(GS) - N(GS)] is positive. The positive value of [N'(GS) - N(GS)] means that the aspherical surface has a displacement towards the image plane side. Accordingly, the aspherical surface induces a negative power. In this case, the negative power of the aspherical surface is excessively strong. Therefore, the over spherical aberration and the over curvature of field occur across the entire zoom range.

In contrast, if a value of [X(GS) - X0(GS)]/[N'(GS) - N(GS)] is greater than or equal to the upper limit of conditional expression (C), the value of [N'(GS) - N(GS)] is negative. The negative value of [N'(GS) - N(GS)] means that the aspherical surface has a displacement towards the object side. Accordingly, the aspherical surface induces a positive power. In this case, the positive power of the aspherical surface is excessively strong. Therefore, the under spherical aberration and the curvature of field occur across the entire zoom range.

Accordingly, when X(GS), X0(GS), N'(GS), and N(GS) are determined so that conditional expression (C) is satisfied, the occurrence of the over and under spherical aberrations and the curvature of field can be prevented.

When the variable-magnification optical systems OS according to the first to sixth examples satisfy conditional expression (C), the values of [X(GS) - X0(GS)]/[N'(GS) - N(GS)] are shown in Table 14. In Table 14, a height H from the light axis of the aspherical surface in the vertical direction is represented by the effective diameter ratio.

Table 14

| Examples | [X(GS)-X0(GS)]/[N'(GS)-N(GS)) | | | | | | | | | | |
|---|---|---|---|---|---|---|---|---|---|---|---|
| | Effective diameter ratio | | | | | | | | | | |
| | 0.0 | 0.1 | 0.2 | 0.3 | 0.4 | 0.5 | 0.6 | 0.7 | 0.8 | 0.9 | 1.0 |
| 1 | 0.000 | 0.000 | -0.001 | -0.003 | -0.011 | -0.027 | -0.058 | -0.110 | -0.193 | -0.323 | -0.520 |
| 2 | 0.000 | 0.000 | -0.001 | -0.004 | -0.012 | -0.029 | -0.062 | -0.117 | -0.206 | -0.345 | -0.558 |
| 3 | 0.000 | 0.000 | -0.002 | -0.009 | -0.028 | -0.070 | -0.148 | -0.279 | -0.484 | -0.788 | -1.219 |
| 4 | 0.000 | 0.000 | -0.001 | -0.008 | -0.024 | -0.059 | -0.125 | -0.234 | -0.407 | -0.667 | -1.047 |
| 5 | 0.000 | 0.000 | -0.001 | -0.006 | -0.018 | -0.044 | -0.092 | -0.171 | -0.292 | -0.468 | -0.714 |
| 6 | 0.000 | 0.000 | -0.001 | -0.004 | -0.012 | -0.030 | -0.063 | -0.120 | -0.209 | -0.346 | -0.549 |

In addition, it is desirable that the first lens group GR1 and the second lens group GR2 of the variable-magnification optical system OS satisfy the following conditional expression (D) (conditional expression (3)):

$$2 < |f1/f2| < 12 \qquad ... (D)$$

where
f1 (mm) = the focal length of the first lens group GR1 and
f2 (mm) = the focal length of the second lens group GR2.

Conditional expression (D) defines the range required for achieving the reduction in the length of the variable-magnification optical system OS on the basis of the focal lengths of the first lens group GR1 and the second lens group GR2.

For example, if a value of |f1/f2| is less than or equal to the lower limit of conditional expression D, the focal length of the first lens group GR1 is short or the focal length of the second lens group GR2 is long. Accordingly, in such a case, the positive power of the first lens group GR1 is relatively strong or the negative power of the second lens group GR2 is relatively weak.

Therefore, if the positive power of the first lens group GR1 is strong, the displacement distance for zooming of the first lens group GR1 is short. However, since the positive power is increased, a variety of aberrations easily occur. To reduce the aberrations, more number of lenses are needed. This prevents the length of the variable-magnification optical system OS from being reduced.

In addition, if the negative power of the second lens group GR2 is weak, the displacement distance for focusing of the second lens group GR2 is relatively increased, and therefore, the length of the variable-magnification optical system OS is increased. Furthermore, since the negative power of the second lens group GR2 is decreased, it is difficult to maintain the illuminance at the periphery at the wide-angle position (W).

In contrast, if a value of |f1/f2| is greater than or equal to the upper limit of conditional expression D, the focal length of the first lens group GR1 is long or the focal length of the second lens group GR2 is short. Accordingly, in such a case, the positive power of the first lens group GR1 is relatively weak or the negative power of the second lens group GR2 is relatively strong.

Therefore, if the positive power of the first lens group GR1 is weak, the displacement distance for zooming of the first lens group GR1 is long, and therefore, the length of the variable-magnification optical system OS is decreased. In addition, if the negative power of the second lens group GR2 is strong, the size of the third lens group GR3 that receives widely diverging light is increased. Thus, the length of the variable-magnification optical system OS is increased.

Accordingly, when the focal lengths of the first lens group GR1 and the second lens group GR2 are determined so as to satisfy conditional expression (D), the length of the variable-magnification optical system OS can be decreased.

When the variable-magnification optical systems OS according to the first to seventh examples satisfy conditional expression (D), a value of |f1/f2| is as follows:

| | |
|---|---|
| the first example: | 7.167 |
| the second example: | 7.107 |
| the third example: | 7.861 |
| the fourth example: | 6.440 |
| the fifth example: | 6.406 |
| the sixth example: | 7.073 |
| the seventh example: | 10.390. |

Furthermore, it is desirable that the following condition (D') in the conditional expression (D) is satisfied:

$$6 < |f1/f2| < 12 \qquad ... (D')$$

In addition, it is desirable that the combined focal length of the first lens group GR1 and the second lens group GR2 of the variable-magnification optical system OS satisfies the following conditional expression (E) (conditional expression (4)):

$$0.9 < f12(w)/fall(w) < 1.5 \qquad \dots (E)$$

where
f12(w) (mm) = the combined focal length of the first lens group GR1 and the second lens group GR2 at the wide-angle position and
fall(w) (mm) = the focal length of the whole variable-magnification optical system OS at the wide-angle position (W).

Note that the second lens group GR2 has the highest negative power among the lens groups GR of the variable-magnification optical system OS. Since the second lens group GR2 has a power stronger than the positive power of the first lens group GR1, the combined power is negative. Accordingly, conditional expression (E) defines the range required for achieving a good balance between the extension of the back focus and the reduction in the length of the variable-magnification optical system OS.

For example, if the combined focal length of the first lens group GR1 and the second lens group GR2 is decreased and, therefore, the value of f12(w)/fall(w) is less than or equal to the lower limit of conditional expression (E), the combined negative power of the first lens group GR1 and the second lens group GR2 is relatively increased. In this case, light input to the third lens group GR3 is widely diverged. Accordingly, to receive the diverged light, the size of the third lens group GR3 should be increased. Therefore, the length of the variable-magnification optical system OS is increased. In addition, since the combined negative power is increased, a variety of aberrations significantly occur.

In contrast, for example, when the combined focal length of the first lens group GR1 and the second lens group GR2 is increased and, therefore, a value of f12(w)/fall(w) is greater than or equal to the upper limit of conditional expression (E), the combined power of the first lens group GR1 and the second lens group GR2 is relatively weak. Accordingly, although the size of the third lens group GR3 can be reduced (i.e., the length of the variable-magnification optical system OS can be short), it is difficult to provide a certain back focus. In addition, since the combined negative power is weak, it is difficult to maintain the illuminance at the periphery.

Accordingly, when the combined focal length of the first lens group GR1 and the second lens group GR2 and the focal length of the variable-magnification optical system OS at the wide-angle position (W) are determined so as to satisfy conditional expression (E), the length of the variable-magnification optical system OS can be reduced and the back focus can be increased.

When the variable-magnification optical systems OS according to the first to seventh examples satisfy conditional expression (E), a value of f12(w)/fall(w) is as follows:

| | |
|---|---|
| the first example: | 1.050 |
| the second example: | 1.090 |
| the third example: | 0.967 |
| the fourth example: | 0.971 |
| the fifth example: | 1.028 |
| the sixth example: | 1.136 |
| the seventh example: | 0.926. |

In addition, to correct various aberrations, it is desirable that at least one surface of the lenses included in the second lens group GR2 is an aspheric surface. For example, in the variable-magnification optical systems OS according to the first, second, and sixth examples, the surface s7[*] of the fourth lens L4 on the object side (i.e., the surface of the negative meniscus lens with a convex surface on the object side) is an aspheric surface.

Furthermore, it is desirable that the surfaces of the lenses of the second lens group GR2 of the variable-magnification optical system OS satisfy the following conditional expression:

$$-0.05 < [X(GR2) - X0(GR2)]/[N'(GR2) - N(GR2)] < 2.0$$

$$\dots (F)$$

where
X(GR2) (mm) = the displacement in the light axis direction at a height H from the light axis of the aspherical surface in the vertical direction (note that the displacement towards the object side is negative and the displacement towards the image plane side is positive)

X0(GR2) (mm) = the displacement in the light axis direction at a height H from the light axis of the reference aspherical surface in the vertical direction (note that the displacement towards the object side is negative and the displacement towards the image plane side is positive)

N(GR2) (1/mm) = the index of refraction of a medium on the object side of the aspherical surface for the d-line

N'(GS) (1/mm) = the index of refraction of a medium on the image plane side of the aspherical surface for the d-line.

In addition, $X(GR2) = X0(GR2) + \Sigma Aj \cdot H^j$ and

$$X0(GR2) = C_0 \cdot H^2/\{1 + \sqrt{(1 - \varepsilon \cdot C_0^2 \cdot H^2)}\} + \Sigma Aj \cdot H^j.$$

Like the aspherical surface included in the second lens group GR2 according to the first, second, and sixth examples, if air is present on the object side and a medium is present on the image plane side, a value of [N'(GR2)-N(GR2)] is positive. In such a case, if a value of [X(GR2) - X0(GR2)]/[N'(GR2)- N(GR2)] is less than or equal to the lower limit of conditional expression (F), the value of [X(GR2) - X0(GR2)] is negative. The negative value of [X(GR2) - X0(GR2)] means that the aspherical surface has a displacement towards the object side. Accordingly, the aspherical surface induces a negative power. In this case, the negative power of the aspherical surface is excessively strong. Therefore, the under distortion occurs at the wide-angle position (W).

In contrast, if a value of [X(GR2) - X0(GR2)]/[N'(GR2) - N(GR2)] is greater than or equal to the upper limit of conditional expression (F), the value of [X(GR2) - X0(GR2)] is positive. The positive value of [X(GR2) - X0(GR2)] means that the aspherical surface has a displacement towards the image plane side. Accordingly, the aspherical surface induces a positive power. In this case, the positive power of the aspherical surface is excessively strong. Therefore, the under spherical aberration occurs at the telephoto position (T). In addition, the under curvature of field occurs across the entire zoom range.

Accordingly, when X(GR2), X0(GR2), N'(GR2), and N(GR2) are determined so that conditional expression (F) is satisfied, the occurrence of various aberrations can be prevented.

When the variable-magnification optical systems OS according to the first, second, and sixth examples satisfy conditional expression (F), the values of [X(GR2) - X0(GR2)]/[N'(GR2)- N(GR2)] are shown in Table 15.

Table 15

| [X(GR2)-X0(GR2)]/[N'(GR2)-N(GR2)] | | | | | | | | | | | |
|---|---|---|---|---|---|---|---|---|---|---|---|
| Examples | Effective diameter ratio | | | | | | | | | | |
| | 0.0 | 0.1 | 0.2 | 0.3 | 0.4 | 0.5 | 0.6 | 0.7 | 0.8 | 0.9 | 1.0 |
| 1 | 0.000 | 0.000 | 0.002 | 0.009 | 0.026 | 0.063 | 0.125 | 0.224 | 0.368 | 0.568 | 0.842 |
| 2 | 0.000 | 0.000 | 0.002 | 0.009 | 0.029 | 0.068 | 0.137 | 0.246 | 0.406 | 0.629 | 0.939 |
| 6 | 0.000 | 0.000 | 0.002 | 0.010 | 0.030 | 0.070 | 0.140 | 0.250 | 0.412 | 0.639 | 0.950 |

Other Embodiments

According to the above-described embodiment, the variable-magnification optical systems OS are applied to an interchangeable lens unit of the DSC 29 (in particular, single-lens reflex DSCs). However, the present invention is not limited thereto. That is, the variable-magnification optical systems OS according to the above-described embodiment are applicable to, for example, silver salt film cameras, video cameras, security cameras, in-car cameras, television-phone cameras, and entry-phone cameras. In summary, the present invention can be applied to an image capturing apparatus that requires a short variable-magnification optical system OS with a relatively long back focus.

It should be understood by those skilled in the art that various modifications, combinations, sub-combinations and alterations may occur depending on design requirements and other factors insofar as they are within the scope of the appended claims or the equivalents thereof.

**Claims**

1.  A variable-magnification optical system comprising:

a first lens group (GR1) having a positive power, a second lens group (GR2) having a negative power, and a third lens group (GR3) having a positive power disposed in this order from an object side to an image plane side, the third lens group (GR3) including a negative lens (L9) on the object side and a positive lens (L10) on the image plane side; and
at least one subsequent positive-power lens group (GR4) having a positive power disposed on the image plane side of the third lens group (GR3);

wherein, when variable magnification is performed from a wide-angle position to a telephoto position and all the lens groups are moved, the first lens group (GR1) and the third lens group (GR3) are monotonically moved towards the object side so that a distance between the first lens group (GR1) and the second lens group (GR2) increases, a distance between the second lens group (GR2) and the third lens group (GR3) decreases, and a distance between the third lens group (GR3) and the subsequent lens group (GR4) closest to the object decreases and wherein the following conditional expression (1) is satisfied:

$$0.5 < f3/fGS(w) < 5 \qquad\qquad \ldots (1)$$

where
f3 = the focal length of the third lens group (GR3), and
fGS(w) = the combined focal length of the subsequent lens groups at the wide-angle position.

2.  The variable-magnification optical system according to Claim 1,
    wherein the subsequent lens groups include only one (GR4) of the positive-power lens groups.

3.  The variable-magnification optical system according to Claim 1,
    wherein the subsequent lens groups include two (GR4, GR5) of the positive-power lens groups and wherein, when variable magnification is performed from a wide-angle position to a telephoto position, a distance between the two positive-power lens groups (GR4, GR5) decreases.

4.  The variable-magnification optical system according to any one of Claims 1 to 3, wherein the following conditional expression (2) is satisfied:

$$0.1 < f3/fall(w) < 8 \qquad\qquad \ldots (2)$$

where
f3 = the focal length of the third lens group (GR3), and
fall(w) = the focal length of the whole variable-magnification optical system at the wide-angle position.

5.  The variable-magnification optical system according to any one of Claims 1 to 4, wherein the following conditional expression (3) is satisfied:

$$2 < |f1/f2| < 12 \qquad\qquad \ldots (3)$$

where
f1 = the focal length of the first lens group (GR1), and
f2 = the focal length of the second lens group (GR2).

6.  The variable-magnification optical system according to any one of Claims 1 to 5, wherein the following conditional expression (4) is satisfied:

$$0.9 < f12(w)/fall(w) < 1.5 \qquad\qquad \ldots (4)$$

where

f12(w) = the combined focal length of the first lens group (GR1) and the second lens group (GR2) at the wide-angle position, and

fall(w) = the focal length of the whole variable-magnification optical system at the wide-angle position.

7. The variable-magnification optical system according to any one of Claims 1 to 6, wherein the negative lens (L9) and the positive lens (L10) included in the third lens group (GR3) are bonded so as to form a cemented lens.

8. The variable-magnification optical system according to any one of Claims 1 to 7, wherein the subsequent lens group (GR4) includes a positive lens (L11), a negative lens (L12), a negative lens (L13), and a positive lens (L14) in this order from the object side to the image plane side or the subsequent lens group (GR4, GR5) includes a positive lens (L11), a negative lens (L12), a positive lens (L13), a negative lens (L14), and a positive lens (L15) in this order from the object side to the image plane side.

9. The variable-magnification optical system according to any one of Claims 1 to 8, wherein at least one of the surfaces of the lenses included in the subsequent lens group (GR4) is an aspherical surface.

10. The variable-magnification optical system according to any one of Claims 1 to 9, wherein at least one of the surfaces of the lenses included in the second lens group (GR2) is an aspherical surface.

11. The variable-magnification optical system according to any one of Claims 1 to 10, wherein focusing is performed by moving the second lens group (GR2).

FIG. 1

EP 1 840 621 A1

# FIG. 2A

FNo. = 3.61 [W]

———— d

— — — SC

-0.5    0.5

SPHERICAL
ABERRATION

SINE CONDITION

# FIG. 2B

Y' = 14.2 [W]

— — — DM

———— DS

-0.5    0.5

ASTIGMATISM

# FIG. 2C

Y' = 14.2 [W]

-5.0    5.0

DISTORTION

EP 1 840 621 A1

FIG. 3A  FIG. 3B  FIG. 3C

EP 1 840 621 A1

# FIG. 4A

FNo. = 4.64 [T]

——— d

— — — SC

-0.5　　0.5
SPHERICAL
ABERRATION

SINE CONDITION

# FIG. 4B

Y' = 14.2 [T]

— — — DM

——— DS

-0.5　　0.5
ASTIGMATISM

# FIG. 4C

Y' = 14.2 [T]

-5.0　　5.0
DISTORTION

## FIG. 5

EP 1 840 621 A1

## FIG. 6A

FNo. = 3.60 [W]

d

————— SC

-0.5        0.5
SPHERICAL
ABERRATION

SINE CONDITION

## FIG. 6B

Y' = 14.2 [W]

————— DM

———— DS

-0.5        0.5
ASTIGMATISM

## FIG. 6C

Y' = 14.2 [W]

-5.0        5.0
DISTORTION

EP 1 840 621 A1

# FIG. 7A

FNo. = 4.10 [M]

d

————— SC

-0.5    0.5
SPHERICAL
ABERRATION

SINE CONDITION

# FIG. 7B

Y' = 14.2 [M]

————— DM

————— DS

-0.5    0.5
ASTIGMATISM

# FIG. 7C

Y' = 14.2 [M]

-5.0    5.0
DISTORTION

EP 1 840 621 A1

# FIG. 8A

FNo. = 4.63 [T]

———— d

– – – – SC

-0.5          0.5
SPHERICAL
ABERRATION

SINE CONDITION

# FIG. 8B

Y' = 14.2 [T]

– – – – DM

———— DS

-0.5          0.5
ASTIGMATISM

# FIG. 8C

Y' = 14.2 [T]

-5.0          5.0
DISTORTION

FIG. 9

# FIG. 10A

FNo. = 3.60 [W]

SPHERICAL
ABERRATION

SINE CONDITION

- d
- SC

# FIG. 10B

Y' = 14.2 [W]

ASTIGMATISM

- DM
- DS

# FIG. 10C

Y' = 14.2 [W]

DISTORTION

-5.0   5.0

EP 1 840 621 A1

# FIG. 11A

FNo. = 4.30 [M]

———— d

– – – – SC

-0.5        0.5
SPHERICAL
ABERRATION

SINE CONDITION

# FIG. 11B

Y' = 14.2 [M]

– – – – DM

———— DS

-0.5        0.5
ASTIGMATISM

# FIG. 11C

Y' = 14.2 [M]

-5.0        5.0
DISTORTION

# FIG. 12A

FNo. = 4.63 [T]

—— d

– – – –SC

-0.5    0.5
SPHERICAL
ABERRATION

SINE CONDITION

# FIG. 12B

Y' = 14.2 [T]

– – – –DM

—— DS

-0.5    0.5
ASTIGMATISM

# FIG. 12C

Y' = 14.2 [T]

-5.0    5.0
DISTORTION

EP 1 840 621 A1

FIG. 13

EP 1 840 621 A1

# FIG. 14A

FNo. = 3.60 [W]

d

----SC

-0.5     0.5

SPHERICAL
ABERRATION

SINE CONDITION

# FIG. 14B

Y' = 14.2 [W]

----DM

DS

-0.5     0.5

ASTIGMATISM

# FIG. 14C

Y' = 14.2 [W]

-5.0     5.0

DISTORTION

FNo.=4.60 [M]  Y'=14.2 [M]  Y'=14.2 [M]

——— d

– – – – SC

– – – – DM

——— DS

-0.5  0.5

SPHERICAL
ABERRATION

SINE CONDITION

-0.5  0.5

ASTIGMATISM

-5.0  5.0

DISTORTION

EP 1 840 621 A1

FIG. 16A

FNo.=5.80 [T]

d
SC

0.5
-0.5
SPHERICAL ABERRATION
SINE CONDITION

FIG. 16B

Y'=14.2 [T]

DM
DS

0.5
-0.5
ASTIGMATISM

FIG. 16C

Y'=14.2 [T]

5.0
-5.0
DISTORTION

# FIG. 17

EP 1 840 621 A1

# FIG. 18A

FNo.=4.10 [W]

———— d

– – – –SC

-0.5　　0.5
SPHERICAL
ABERRATION
SINE CONDITION

# FIG. 18B

Y'=14.2 [W]

– – – –DM

———— DS

-0.5　　0.5
ASTIGMATISM

# FIG. 18C

Y'=14.2 [W]

-5.0　　5.0
DISTORTION

EP 1 840 621 A1

# FIG. 19A

# FIG. 19B

# FIG. 19C

FNo.=4.88 [M]

Y'=14.2 [M]

Y'=14.2 [M]

———d

- - - -SC

- - - -DM

———DS

-0.5     0.5
SPHERICAL
ABERRATION

SINE CONDITION

-0.5     0.5
ASTIGMATISM

-5.0     5.0
DISTORTION

EP 1 840 621 A1

FIG. 20A

FNo. = 5.80 [T]

————— d

— — — SC

-0.5        0.5
SPHERICAL
ABERRATION

SINE CONDITION

FIG. 20B

Y' = 14.2 [T]

— — — — DM

————— DS

-0.5        0.5
ASTIGMATISM

FIG. 20C

Y' = 14.2 [T]

-5.0        5.0
DISTORTION

# FIG. 21

EP 1 840 621 A1

# FIG. 22A

FNo.=3.60 [W]

————— d

————— SC

-0.5     0.5
SPHERICAL
ABERRATION
SINE CONDITION

# FIG. 22B

Y'=14.2 [W]

————— DM

————— DS

-0.5     0.5
ASTIGMATISM

# FIG. 22C

Y'=14.2 [W]

-5.0     5.0
DISTORTION

EP 1 840 621 A1

EP 1 840 621 A1

# FIG. 23A

FNo. = 4.30 [M]

——————— d

— — — —SC

-0.5        0.5
SPHERICAL
ABERRATION
SINE CONDITION

# FIG. 23B

Y' = 14.2 [M]

— — — —DM

——————DS

-0.5        0.5
ASTIGMATISM

# FIG. 23C

Y' = 14.2 [M]

-5.0        5.0
DISTORTION

EP 1 840 621 A1

# FIG. 24A

FNo. = 4.63 [T]

——— d

— — — SC

-0.5     0.5
SPHERICAL
ABERRATION

SINE CONDITION

# FIG. 24B

Y' = 14.2 [T]

— — — DM

——— DS

-0.5     0.5
ASTIGMATISM

# FIG. 24C

Y' = 14.2 [T]

-5.0     5.0
DISTORTION

# FIG. 25

EP 1 840 621 A1

EP 1 840 621 A1

# FIG. 26A

FNo. = 3.60 [W]

———— d

– – – – SC

-0.5        0.5
SPHERICAL
ABERRATION

SINE CONDITION

# FIG. 26B

Y' = 14.2 [W]

– – – – DM

———— DS

-0.5        0.5
ASTIGMATISM

# FIG. 26C

Y' = 14.2 [W]

-5.0        5.0
DISTORTION

# FIG. 27A

FNo. = 4.57 [M]

d

- - - SC

-0.5        0.5

SPHERICAL
ABERRATION

SINE CONDITION

# FIG. 27B

Y' = 14.2 [M]

- - - - DM

DS

-0.5        0.5

ASTIGMATISM

# FIG. 27C

Y' = 14.2 [M]

-5.0        5.0

DISTORTION

EP 1 840 621 A1

FIG. 28A  FNo.=5.80 [T]  d  SC  SPHERICAL ABERRATION  SINE CONDITION

FIG. 28B  Y'=14.2 [T]  DM  DS  ASTIGMATISM

FIG. 28C  Y'=14.2 [T]  DISTORTION

# FIG. 29

**European Patent Office**

**EUROPEAN SEARCH REPORT**

Application Number

EP 07 10 5245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 061 180 A (HAYAKAWA SHINGO [JP]) 9 May 2000 (2000-05-09) | 1,3,4,7, 9-11 | INV. G02B15/173 |
| Y | * figures 14(a)-14(c); example 5 * | 8 | |
| A | * figures 14(a)-14(c); example 5 * | 5,6 | |
| | ----- | | |
| X | US 2004/223070 A1 (SHIRASUNA TAKASHI [JP]) 11 November 2004 (2004-11-11) | 1,2,7, 9-11 | |
| Y | * figure 1; example 1 * | 8 | |
| A | * figure 1; example 1 * | 5,6 | |
| | ----- | | |
| A | JP 11 202201 A (MINOLTA CO LTD) 30 July 1999 (1999-07-30) * the whole document * | 6 | |
| | ----- | | |
| Y | US 5 105 311 A (TOKUMARU HISASHI [JP] ET AL) 14 April 1992 (1992-04-14) * figure 1; example 1; table 1 * | 8 | |
| | ----- | | |

**TECHNICAL FIELDS SEARCHED    (IPC)**

G02B

The present search report has been drawn up for all claims

| Place of search | Date of completion of the search | Examiner |
|---|---|---|
| Munich | 22 August 2007 | Michel, Alain |

EPO FORM 1503 03.82 (P04C01)

European Patent
Office

Application Number

EP 07 10 5245

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent
Office

**LACK OF UNITY OF INVENTION
SHEET B**

Application Number

EP 07 10 5245

The Search Division considers that the present European patent application does not comply with the requirements of unity of invention and relates to several inventions or groups of inventions, namely:

1. claims: 1-5,7,9-11

Claim 5 relates to a +-++ zoom according to claim 1, the latter being known from the disclosure of document US 6 061 180 A (D1) which discloses an optical zoom comprising, from object- to image-side (see e.g. figures 14(a)-14(c) and corresponding numerical example 5 columns 19-20): a first lens group (I) having positive power, a second lens group (II) having negative power and a third lens group (III) having positive power including a negative lens (r14, r15) on its object-side and a positive lens (r15, r16) on its image-side; and [at least] one subsequent lens group (IV) having positive power; wherein all lens groups are moved during zooming from wide angle- to telephoto-end, the first (I) and the third (III) lens groups are monotonically moved towards the object-side so that the distance (d5) between the first and the second lens group increases, the distance (d13) between the second (II) and the third (III) lens group decreases and the distance (d16) between the third (III) and the subsequent lens group the closest to the object-side (IV) decreases and wherein the inequalities $0.5 < f3/fGS(w) < 5$ are satisfied, f3 denoting the focal length of the third lens group (III) and fGS(w) denoting the combined focal length of the subsequent lens groups, since $f3 = 52.338$ and $fGS(w) = 19.143$ hence $f3/fGS(w) = 2.734$.
The zoom according to claim 1 is also obvious over the disclosure of document US 2004/223070 A1 (D2).
Claims 2-4, 7 and 9-11 depend on claim 1 and are also obvious over the disclosure of D1 or D2.
The underlying problem to be solved is how to achieve a better balance between the amount of displacement of the first lens group for zooming and the zoom compactness.
The special feature is the ratio between the focal lengths of the first and second lens groups, fulfilling inequalities (3).

---

2. claims: 1,6

Claim 6 relates to a +-++ zoom according to claim 1, the latter being obvious over the disclosure of D1 or D2 (see above).
The underlying problem to be solved is how to achieve a better balance between the retrofocus effect and the compactness of the front lens group.
The special feature is the ratio at wide angle end between the composite focal length of the two first lens groups and the focal length of the whole zoom, fulfilling inequalities (4).

---

The Search Division considers that the present European patent application does not comply with the requirements of unity of invention and relates to several inventions or groups of inventions, namely:

3. claims: 1,8

Claim 8 relates to a +-++ zoom according to claim 1, the latter being obvious over the disclosure of D1 or D2 (see above).
The underlying problem to be solved is how to move away the position of the exit pupil of the zoom while increasing the back-focus length.
The special feature is the lens constitution of the subsequent lens group being +--+ or subsequent lens groups being +-+-+.

---

**ANNEX TO THE EUROPEAN SEARCH REPORT
ON EUROPEAN PATENT APPLICATION NO.**

EP 07 10 5245

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2007

| Patent document cited in search report | | Publication date | Patent family member(s) | | Publication date |
|---|---|---|---|---|---|
| US 6061180 | A | 09-05-2000 | NONE | | |
| US 2004223070 | A1 | 11-11-2004 | CN<br>JP | 1550816 A<br>2004333770 A | 01-12-2004<br>25-11-2004 |
| JP 11202201 | A | 30-07-1999 | NONE | | |
| US 5105311 | A | 14-04-1992 | JP<br>JP | 2870035 B2<br>3083005 A | 10-03-1999<br>09-04-1991 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000075204 A

- JP 2003241088 A